# EUROPÄISCHE PATENTSCHRIFT

(11) **EP 0 709 591 B1**
(45) Veröffentlichungstag und Bekanntmachung des Hinweises auf die Patenterteilung: **01.12.1999**
(21) Anmeldenummer: 95117531.4
(22) Anmeldetag: 06.04.1993
(51) Int. Cl.: F16D 23/14

(54) **Ausrückeranordnung für eine Kraftfahrzeug-Reibungskupplung**
Friction clutch release device
Butée pour embrayage à friction

(30) Priorität: 06.04.1992 DE 4211476; 06.04.1992 DE 4211477; 06.04.1992 DE 4211478; 06.02.1993 DE 4303489
(43) Veröffentlichungstag der Anmeldung: 01.05.1996
(62) Teilanmeldung aus: 93105700.4
(73) Patentinhaber: Mannesmann Sachs Aktiengesellschaft, 97424 Schweinfurt (DE)
(72) Erfinder: Mischler, Manfred, D-97447 Frankenwinheim (DE); Müller, Roland, D-97505 Geldersheim (DE); Riese, Hans-Walter, D-97525 Schwebheim (DE); Müller, Karl, D-97490 Poppenhausen (DE); Stürmer, Winfried, D-97502 Euerbach (DE); Husse, Ulrich, D-97422 Schweinfurt (DE)
(74) Vertreter: Liska, Horst, Dr.-Ing.

(56) Entgegenhaltungen:
- EP-A- 0 153 087
- FR-A- 834 298
- FR-A- 2 539 473
- FR-A- 2 622 265
- FR-A- 2 629 882
- GB-A- 2 138 095
- GB-A- 2 259 345

## Beschreibung

Die Erfindung betrifft eine Ausrückeranordnung für eine im Antriebsstrang zwischen einer Brennkraftmaschine und einem Getriebe eines Kraftfahrzeugs angeordnete Reibungskupplung.

Aus DE-A-35 37 788, DE-A-39 19 943 und DE-A-39 19 944 sind Ausrückeranordnungen für eine im Antriebsstrang zwischen einer Brennkraftmaschine und einem Getriebe eines Kraftfahrzeugs angeordnete Reibungskupplung bekannt, deren zusammen mit der Reibungskupplung um eine Drehachse rotierende, durch Federzungen einer Membranfeder gebildete Ausrückelemente im wesentlichen radial zur Drehachse hin sich erstrecken. Die Federzungen werden zum Ausrücken der Reibungskupplung mittels der Ausrückeranordnung zum Getriebe hin gezogen. Die Ausrückeranordnung umfaßt hierzu einen konzentrisch zur Drehachse an den Federzungen befestigten Ausrückring, der sich auf der Motorseite der Federzungen abstützt und ein in Richtung der Drehachse bewegliches, beispielsweise an dem Getriebe verschiebbar geführtes Ausrücklager mit einem rotierenden inneren Lagerring und einem nicht rotierenden äußeren Lagerring. Um das Ausrücklager, welches sich in aller Regel nur schwer zugänglich in einer die Kupplung umschließenden Glocke des Getriebes befindet, leichter montieren zu können, sind axial miteinander kuppelbare Schnappverbindungsmittel zwischen dem Ausrückring und dem rotierenden Lagerring vorgesehen. Die Schnappverbindungsmittel werden durch annähernd konisch verlaufende Kraftübertragungs-Ringflächen an dem Ausrückring und dem rotierenden Lagerring gebildet und umfassen einen radial federnden Lastübertragungsring, welcher zwischen die Kraftübertragungs-Ringflächen schnappbar ist.

Bei den bekannten Ausrückeranordnungen müssen die Schnappverbindungsmittel durch Vorspannkräfte innerhalb des Kupplungsbetätigungssystems in Auskuppelrichtung vorbelastet werden, um sicherzustellen, daß die Bauteile der Schnappverbindung stets in gegenseitiger Anlage verbleiben. Im Betrieb des Kraftfahrzeugs ist es jedoch nicht immer möglich, diese Vorbelastung dauernd aufrecht zu erhalten und zugleich für möglichst geringe Vorspannkräfte zu sorgen. Zu hohe Vorspannkräfte an dieser Stelle können die Lebensdauer des Ausrücklagers verringern und zugleich die Funktion der Reibungskupplung beeinträchtigen, da die Vorspannkräfte der Kraft der Kupplungshauptfeder entgegenwirken. Beispielsweise kann unter bestimmten Umständen durch Vibrationen der Brennkraftmaschine der Anlagekontakt der Einzelteile der Schnappverbindung kurzfristig verlorengehen, so daß an diesen Stellen erhöhter Verschleiß auftritt.

Aus GB 2 138 095 A ist es bekannt, die vorstehenden Nachteile dadurch zu vermeiden, daß auf der Getriebeseite einer die Kupplungshauptfeder bildenden Membranfeder eine Vorspannfeder angeordnet ist, die sich mit ihrem Außenumfang an den Federzungen der Membranfeder und ihrem Innenumfang in einer Ringnut des rotierenden Lagerrings des Ausrücklagers abstützt. Die Vorspannfeder sorgt unabhängig von eventuell über das Kupplungsbetätigungssystem ausgeübten Kräften für einen dauernden Anlagekontakt, der auch bei dieser Ausrückeranordnung den rotierenden Lagerring mit dem motorseitig an den Membranfederzungen anliegenden Ausrückring kuppelnden Schnappverbindungsmitteln.

Aus FR 2 622 265 A ist eine Ausrückanordnung bekannt, bei welcher an den Membranfederzungen einer die Kupplungshauptfeder bildenden Membranfeder ein Trägerring befestigt ist, an dem eine axial federnde Ringscheibe angenietet ist. Die Ringscheibe ist in eine Umfangsnut am rotierenden Lagerring des Ausrücklagers einschnappbar oder fixiert an den Trägerring einen zusätzlichen Kraftübertragungsring, der dann seinerseits in die Umfangsnut des rotierenden Lagerrings einschnappbar ist. In Umfangsrichtung verteilt sind aus der Ringscheibe mehrere Federarme freigestanzt, die im eingeschnappten Zustand an der axialen Stirn des rotierenden Lagerrings anliegen und die Schnappverbindung axial verspannen.

Es ist Aufgabe der Erfindung, eine Ausrückanordnung der vorstehend erläuterten Art, bei welcher durch Verspannung der Schnappverbindung der Verschleiß im Betrieb gemindert ist, so zu verbessern, daß die Montage vereinfacht wird, insbesondere die zum Schließen der Schnappverbindung erforderlichen Kräfte vergleichsweise gering sind. Die Anordnung soll möglichst platzsparend sein und die Bedienbarkeit der Ausrückeranordnung nicht beeinträchtigen.

Die Erfindung geht aus von einer Ausrückeranordnung für eine im Antriebsstrang zwischen einer Brennkraftmaschine und einem Getriebe eines Kraftfahrzeugs angeordneten Reibungskupplung, deren zusammen mit der Reibungskupplung um eine Drehachse rotierende, insbesondere durch Federzungen einer Membranfeder gebildete, im wesentlichen radial zur Drehachse hin sich erstreckende Ausrückelemente zum Ausrücken der Reibungskupplung zum Getriebe hin bewegbar sind, wobei die Ausrückeranordnung umfaßt:
- einen konzentrisch zur Drehachse an den Ausrückelementen befestigten, auf der Motorseite der Ausrückelemente abgestützten Ausrückring,
- ein in Richtung der Drehachse bewegliches Ausrücklager mit einem rotierenden, insbesondere inneren Lagerring und einem nicht rotierenden, insbesondere äußeren Lagerring und
- axial miteinander kuppelbare Schnappverbindungsmittel zwischen dem Ausrückring und dem rotierenden Lagerring, umfassend Kraftübertragungsflächen, insbesondere angenähert konisch verlaufende Kraftübertragungs-Ringflächen an dem Ausrückring und dem rotierenden Lagerring und wenigstens ein radial federndes Lastübertragungselement, insbesondere in Form eines radial federnden Lastübertragungsrings, welches zwischen die Kraftübertragungsflächen schnappbar ist, wobei zwischen dem Ausrückring oder den Ausrückelementen einerseits und dem rotierenden Lagerring andererseits ein im wesentlichen axial federndes Vorspannelement eingespannt ist, welches die Schnappverbindungsmittel axial gegeneinander vorspannt und wenigstens ein im wesentlichen ringförmiges, axial federndes, zur Drehachse konzentrisches und als Tellerfeder oder als Membranfeder mit radial abstehenden Federzungen ausgebildetes Federelement umfaßt.

Die erfindungsgemäße Verbesserung ist dadurch gekennzeichnet, daß das Federelement mit einer Vorspannung angeordnet ist, deren Wert bei nicht miteinander gekuppelten Schnappverbindungsmitteln so bemessen ist, daß sowohl dieser Wert der Vorspannung als auch der Wert der Vorspannung des Federelements bei miteinander gekuppelten Schnappverbindungsmitteln auf einem Ast der Federkraft-Federweg-Kennlinie des Federelements liegen, in welchem die Federkraft mit wachsendem Federweg abnimmt.

Das Vorspannelement sorgt damit in an sich bekannter Weise unabhängig von eventuell über das Kupplungsbetätigungssystem ausgeübten Kräften für einen dauernden Anlagekontakt zwischen den Kraftübertragungsflächen, die sich über das Lastübertragungselement aneinander abstützen. Das Vorspannelement kann speziell dieser Aufgabe angepaßt werden, so daß auch kurzfristiger Verlust des Anlagekontakts vermieden wird. Da das Vorspannelement im Bereich des rotierenden Lagerrings und des Ausrückrings bzw. der Ausrückelemente angeordnet ist, ist nur wenig zusätzlicher Bauraum erforderlich. Das Vorspannelement befreit das Kupplungsbetätigungssystem einschließlich des Ausrücklagers vor einer eventuellen Überlastung aufgrund der für die Vorspannung der Schnappverbindungsmittel bisher erforderlichen Kräfte in dem Betätigungssystem. Zusätzlich wird jedoch für eine Tellerfeder bzw. Membranfeder charakteristische Federkraft/Federweg-Kennlinie zur Minderung der bei der Montage aufzuwendenden Kräfte ausgenutzt, ohne daß der durch das Vorspannelement angestrebte Effekt verloren gehen würde. Indem die Vorspannung auf dem absteigenden Ast der Kennlinie so gewählt wird, daß sie bei nicht geschlossener Schnappverbindung größer ist als bei- geschlossener Schnappverbindung, wird sichergestellt, daß während des Montagevorgangs die Federkraft der Teller- bzw. Membranfeder entsprechend dem absteigenden Ast der Kennlinie deutlich abfällt und sich vorzugsweise im Bereich des Federkraftminimums bewegt. Während der Montage ist also die Betätigungskraft der Schnappverbindung sehr gering, während die Haltekraft im montierten Zustand hinreichend groß bleibt.

Das als Teller- oder Membranfeder ausgebildete Federelement ist in einer bevorzugten Ausgestaltung auf der Motorseite des Ausrückrings angeordnet, im Bereich seines Außenumfangs an dem Ausrückring gehalten und im Bereich seines Innenumfangs am rotierenden Lagerring abgestützt. Der Platzbedarf einer solchen Anordnung ist verhältnismäßig gering, und es können Teller- bzw. Membranfedern mit verhältnismäßig breiter Biegefläche eingesetzt werden.

Der Ausrückring hat zweckmäßigerweise einen angenähert radial abstehenden, im wesentlichen ringförmigen Flansch, mit dem er auf der Motorseite der Ausrückelemente aufliegt sowie einen im wesentlichen axial sich erstreckenden Ringbereich, der in eine von den Ausrückelementen radial begrenzte, zentrische Öffnung hineinreicht und auf seiner inneren Umfangsfläche die Kraftübertragungs-Ringfläche des Ausrückrings bildet. Am Außenumfang des Flanschs des Ausrückrings ist ein Stützring, insbesondere in Form eines um den Flansch herum gebördelten Blechrings angeordnet, der in axialem Abstand zum Flansch eine ringförmige Stützkante für die Abstützung des Federelementes aufweist. Eine solche Anordnung kann preiswert hergestellt werden und ermöglicht die Unterbringung der Teller-bzw. Membranfeder in einem Bereich außerhalb des von den lösbaren Schnappverbindungsmitteln beanspruchten Bauraums. Das Vorspannelement kann damit auch bei herkömmlichen Konstruktionen von Ausrückeranordnungen eingesetzt werden, ohne daß deren Komponenten, insbesondere der Lastübertragungsring, geändert werden müßten. Bei dem Blechring kann es sich um ein ringförmig geschlossenes Blechteil handeln oder aber auch um einen zu einem Ring gebogenen Blechstreifen handeln, was besonders preisgünstig ist.

In einer bevorzugten Ausgestaltung ist vorgesehen, daß die Teller- bzw. Membranfeder bereits bei nicht geschlossener Schnappverbindung, d. h. vor der Montage unter Vorspannung vormontiert ist. Der Flansch des Ausrückrings kann hierbei mit einer ersten Wölbung an den Ausrückelementen anliegen, wobei die erste Wölbung zur Drehachse hin in eine zweite entgegengesetzte Wölbung übergeht, an der das Federelement bei nicht miteinander gekuppelten Schnappverbindungsmitteln vorgespannt anliegt. Damit kann in vorteilhafter Weise die Vorspannkraft dieser Feder auf den absteigenden Ast ihrer Federkraft-Federweg-Kennlinie festgelegt werden, so daß während des Montagevorgangs der Schnappverbindung mit zunehmenden Federweg eine geringere Federkraft zu überwinden ist, die jedoch dann in Einbaulage wieder ein höheres und damit betriebssicheres Niveau erreicht.

Soweit das Vorspannelement als Membranfeder ausgebildet ist, hat diese einen am Stützring aufliegenden Federkörper mit radial nach innen weisenden Federzungen. Durch diese Ausgestaltung läßt sich die Membranfeder in weiterem Umfang den Einbauverhältnissen problemlos anpassen.

Bei den vorstehend erläuterten Varianten ist das Vorspannelement auf der Motorseite der Ausrückelemente der Kupplung angeordnet. Im Unterschied dazu ist bei den nachfolgend erläuterten Varianten das Vorspannelement auf der Getriebeseite der Ausrückelemente vorgesehen, was den Vorteil hat, daß dort ohnehin vorgesehener Platz ohne axiale Vergrößerung der Ausrückeranordnung ausgenutzt werden kann. Auch hier hat der Ausrückring zweckmäßigerweise einen angenähert radial abstehenden, im wesentlichen ringförmigen Flansch, mit dem er auf der Motorseite der Ausrückelemente aufliegt sowie einen im wesentlichen axial sich erstreckenden Ringbereich, der in eine von den Ausrückelementen radial begrenzte, zentrische Öffnung hineinreicht. Der Ringbereich hat bevorzugt eine zum Ausrücklager weisende axiale Stirnfläche und bildet auf seiner inneren Umfangsfläche die Kraftübertragungs-Ringfläche des Ausrückrings. Das Vorspannelement kann auf diese Weise zwischen der Stirnfläche des Ausrückrings und einer axial entgegengerichteten Fläche des rotierenden Lagerrings eingespannt werden. Das Vorspannelement kann ein oder mehrere Teller- oder Membranfedern umfassen, von denen zumindest eine sich mit ihrem Innenumfang an der axialen Stirnfläche des Ausrückrings abstützt. Die Abstützung am rotierenden Lagerring kann hierbei direkt oder über eine zusätzliche, an dem rotierenden Lagerring ihrerseits abgestützte, ringförmige Scheibe erfolgen. Die Scheibe sitzt hierbei zweckmäßigerweise auf einem axial zur Stirnfläche des Ausrückrings weisenden Absatz des rotierenden Lagerrings und kann zugleich zur Zentrierung der Teller- bzw. Membranfeder ausgenutzt werden, speziell, wenn das Vorspannelement lediglich eine einzige solche Feder umfaßt. Auch bei den letztgenannten Versionen werden zweckmäßigerweise die speziellen Federeigenschaften einer Membran- oder Tellerfeder genutzt, indem die Montagewege der Feder auf den absteigenden Ast der Federkennlinie gelegt werden. Die sich hieraus ergebende Montageerleichterung kann nicht nur bei Vorspannelementen mit einer einzigen Teller- oder Membranfeder erreicht werden, sondern auch bei Vorspannelementen mit mehreren, in Reihe hintereinander angeordneten Teller- bzw. Membranfedern.

In einer Variante mit mehreren, das Vorspannelement bildenden Federn ist vorgesehen, daß das Vorspannelement wenigstens ein Paar als Tellerfeder oder Membranfeder ausgebildete Federelemente aufweist, die sich an ihrem Außenumfang aneinander abstützen und von denen ein erstes Federelement mit seinem Innenumfang an der Stirnfläche des Ausrückrings und ein zweites Federelement mit seinem Innenumfang an dem rotierenden Lagerring abstützt. Diese Anordnungsweise benötigt in radialer Richtung vergleichsweise wenig Bauraum und erlaubt auch die Abstützung der Federelemente auf einem vergleichsweise kleinen Innendurchmesser, so daß gegebenenfalls auch auf zusätzliche Scheiben, insbesondere auf der Seite des rotierenden Lagerrings, verzichtet werden kann.

Zwischen dem ersten und dem zweiten Federelement kann eine ringförmige Zwischenscheibe angeordnet sein, die die gegenseitige Abstützung der beiden Federelemente aneinander erleichtert und verschleißärmer gestaltet. Alternativ können das erste und das zweite Federelement an ihrem Außenumfang axial abstehende Lappen tragen, die in Aussparungen am jeweils anderen Federelement eingreifen. Es versteht sich, daß auch bei paarweise angeordneten Federelementen die Abstützung an dem rotierenden Lagerring über eine zusätzliche ringförmige Scheibe erfolgen kann.

In einer bevorzugten Ausgestaltung ist vorgesehen, daß axial zwischen der Stirnfläche des Ausrückrings und dem mit seinem Innenumfang an der Stirnfläche abgestützten Federelement eine ringförmige Stützscheibe angeordnet ist, und daß der rotierende Lagerring auf der dem Federelement abgewandten Seite der Stützscheibe einen die Stützscheibe axial sichernden Absatz aufweist. Die Stützscheibe hält das bzw. die Federelemente bei noch nicht geschlossener Schnappverbindung unverlierbar an dem rotierenden Lagerring und kann, wie dies vorstehend für eine auf der Motorseite der Ausrückelemente angeordnete Teller- oder Membranfeder beschrieben wurde, dazu ausgenutzt werden, die Teller- bzw. Membranfeder auch bei noch nicht geschlossener Schnappverbindung auf den abfallenden Ast ihrer Federkennlinie vorzuspannen, um die Montage der Ausrückeranordnung zu erleichtern.

Die Stützscheibe kann darüber hinaus zur Zentrierung jedes Federelements ausgenutzt werden, beispielsweise indem sie an ihrem Außenumfang axial abstehende Lappen aufweist, die den Außenumfang jedes Federelements übergreifen. Für diese Zentrierung kann allerdings alternativ auch auf den axial sich erstreckenden Ringbereich des Ausrückrings im Bereich von dessen Stirnfläche ein Zentrierteil, beispielsweise ein Zentrierblechteil aufgesetzt sein, von dem die Lappen im wesentlichen axial abstehen. Die Lappen können nach radial innen gebogene Enden haben, die gleichfalls das Vorspannelement unverlierbar sichern und gegebenenfalls zur Vorspannung des lediglich am Ausrückring vormontierten Vorspannelements herangezogen werden können.

Bei dem Lastübertragungsring handelt es sich um einen radial elastischen Ring, der beim Schließen der Schnappverbindung von einer der beiden Komponenten der Schnappverbindungsmittel aufgeweitet wird, bevor er aufgrund seiner radialen Eigenelastizität hinter die Lastübertragungs-Ringflächen dieser Komponente schnappt. Um die Schnappverbindung bei Bedarf wieder lösen zu können, ist in einer zweckmäßigen Ausgestaltung vorgesehen, daß der Lastübertragungsring als offener Ring ausgebildet ist, dessen Enden zunächst im wesentlichen in der Ebene des offenen Rings angenähert radial nach außen verlaufen, dann axial zum Ausrücklager hin abgebogen sind, um dann erneut nach radial außen zu verlaufen. Die Enden sind von außen zugänglich, so daß der Lastübertragungsring durch Auseinanderdrücken der Enden wieder aufgeweitet und die Schnappverbindung gelöst werden kann. Der radial unterhalb des axial abgebogenen Bereichs der beiden Enden des Lastübertragungsrings wird in einer bevorzugten Ausgestaltung zur Unterbringung zumindest eines Teils des Vorspannelements ausgenutzt, indem zumindest das mit seinem Innenumfang an der axialen Stirnfläche des Ausrückrings abgestützte Federelement mit dem axial abgebogenen Bereich der beiden Enden axial überlappt. Diese Ausgestaltung ist insbesondere bei mit ihrem Innenumfang an der Stirnfläche des Ausrückrings abgestützten Teller-oder Membranfedern von Vorteil, um die axiale Baulänge der Ausrückeranordnung möglichst gering zu halten.

Die Minderung des axialen Bauraums steht gleichfalls im Vordergrund einer Ausführungsform, die dadurch gekennzeichnet ist, daß der Ausrückring einen angenähert radial abstehenden, im wesentlichen ringförmigen Flansch hat, mit dem er auf der Motorseite der Ausrückelemente aufliegt, sowie einen im wesentlichen axial sich erstreckenden Ringbereich aufweist, der in eine von den Ausrückelementen radial begrenzte, zentrische Öffnung hineinreicht und auf seiner inneren Umfangsfläche die Kraftübertragungs-Ringfläche des Ausrückrings bildet, daß der Lastübertragungsring als offener Ring ausgebildet ist, dessen Enden zum Lösen der Schnappverbindung zumindest angenähert in den Raum axial zwischen dem Bereich der die Öffnung begrenzenden Enden der Ausrückelemente und dem Ausrücklager hineinreichen und daß das Vorspannelement einen Durchlaßraum bildet oder begrenzt, durch den hindurch die Enden insbesondere berührungsfrei radial nach außen geführt sind. Um zu verhindern, daß die Enden auch während des Betriebs das Vorspannelement nicht berühren, ist dieses zweckmäßigerweise relativ zum Ausrückring oder zu den Ausrückelementen drehfest positioniert bzw. fixiert.

Das Federelement ist zweckmäßigerweise im Bereich seines Außenumfangs direkt an den Ausrückelementen und im Bereich seines Innenumfangs an dem rotierenden Lagerring abgestützt. Eine solche Anordnung ist unabhängig von der Befestigung des Ausrückrings, wodurch die Gestaltungsfreiheit des Ausrückrings nicht eingeschränkt wird.

Die Öffnung des Federelements für den Durchtritt der Enden des Lastübertragungsrings ist zweckmäßigerweise als zur Drehachse konzentrisch verlaufender Schlitz ausgebildet. Diese Variante eignet sich insbesondere für als Tellerfeder ausgebildete Federelemente.

Das Federelement kann jedoch auch als Membranfeder mit radial nach innen ragenden, durch radiale Schlitze getrennte Federzungen ausgebildet sein, wobei dann zweckmäßigerweise die Enden des Lastübertragungsrings durch zumindest einen in Umfangsrichtung verbreiterten dieser Schlitze radial nach außen geführt sind. Eine solche Ausgestaltung ermöglicht zum einen eine in Umfangsrichtung symmetrische Ausbildung des Federelements und zum anderen eine größere Gestaltungsfreiheit, was die Ausbildung der Federzungen und die Abstimmung der Federkräfte betrifft, insbesondere wenn die Membranfeder mehrere in gleichen Winkelabständen voneinander angeordnete, verbreiterte Schlitze hat.

Die Fixierung des als Tellerfeder oder Membranfeder ausgebildeten Federelements in Umfangsrichtung erfolgt, um die Zuordnung der Aussparungen oder Unterbrechungen zum Lastübertragungsring sicherzustellen, in einfacher Weise dadurch, daß vom Außenumfang des Federelements Nasen axial abstehen, die zwischen die Ausrückelemente greifen und das Federelement drehfest fixieren. Auf diese Weise werden die zwischen den Ausrückelementen der Reibungskupplung ohnehin vorhandenen Öffnungen für die Positionierung mit ausgenutzt.

Zweckmäßigerweise ist das Federelement im Abstützbereich seines Innenumfangs und seines Außenumfangs zur Verschleißminderung entgegengesetzt gewölbt. Die Wölbungen setzen die Flächenpressung in diesen Bereichen herab.

Auch in den letztgenannten Varianten erfolgt die Abstützung gegenüber dem rotierenden Lagerring bevorzugt über eine ringförmige Scheibe, die sich an einem axial zur Stirnfläche des Ausrückrings weisenden Absatz des rotierenden Lagerrings unmittelbar neben dem Ausrücklager abstützt. Diese Scheibe ermöglicht auch hier eine weitgehend freie Wahl des Anlagedurchmessers an dieser Stelle und sie berücksichtigt die radiale Verschiebung beider Teile relativ zueinander während des Montagevorgangs, nachdem das Federelement im ungespannten Zustand einen größeren mittleren Durchmesser hat als im gespannten Zustand.

Um die Montage zu erleichtern, ist das Federelement im Bereich seines Außenumfangs an den Ausrückelementen mittels Haltefedern fixiert, d. h. vormontiert. Die Fixierung erfolgt zweckmäßigerweise von der Seite des Ausrücklagers her, wobei die Haltefedern mit axial verlaufenden Armen die Zwischenräume zwischen den Ausrückelementen durchdringen und die Ausrückelemente hintergreifen.

Die bereits vorteilhaft zur axialen Abstützung des Vorspannelements am rotierenden, inneren Lagerring angeordnete Scheibe kann zugleich für eine Verbesserung der Lagerabdichtung ausgenutzt werden. Der nicht rotierende, äußere Lagerring ist hierzu auf seiner den Ausrückelementen zugewandten Seite mit einer nach radial innen reichenden, in geringem Abstand vom rotierenden, inneren Lagerring endenden Deckscheibe versehen, während die am rotierenden Lagerring in geringem Abstand zur Deckscheibe angeordnete, das Vorspannelement abstützende Scheibe zusammen mit der Deckscheibe eine Labyrinthdichtung bildet. Aufgrund der radialen Überdeckung dieser Scheibe und der Deckscheibe kann zumindest auf dieser Seite des Ausrücklagers der Aufwand für die Lagerabdichtung vermindert werden.

Die Schnappverbindungsmittel wurden vorstehend im Zusammenhang mit konischen Lastübertragungs-Ringflächen und einem Lastübertragungsring beschrieben. Es versteht sich, daß auch andere Ausführungsformen von Schnappverbindungsmitteln eingesetzt werden können. Insbesondere sollen unter konischen Ringflächen allgemein sich in axialer Richtung verjüngende Ringflächen verstanden werden, deren Krümmung z. B. der Materialquerschnittrundung des Lastübertragungsrings zur Minderung der Flächenpressung angepaßt ist. Ferner wurden die Ausrückelemente im vorstehenden als Federzungen einer die Kupplungshauptfeder bildenden Membranfeder beschrieben. Bei den Ausrückelementen kann es sich aber auch um Ausrückhebel handeln, die mit einer separaten Kupplungshauptfeder zusammenwirken.

Im folgenden werden Ausführungsbeispiele der Erfindung anhand einer Zeichnung näher erläutert. Hierbei zeigt:
- Fig. 1: einen teilweisen Axiallängsschnitt durch eine Kraftfahrzeug-Reibungskupplung mit einer erfindungsgemäßen Ausrückeranordnung, deren Schnappverbindungsmittel durch eine auf der Motorseite eines Ausrückrings angeordnete Membranfeder vorspannbar ist;
- Fig. 2: eine Detaildarstellung der Ausrückeranordnung;
- Fig. 3: ein Diagramm mit einer die Federkraft F in Abhängigkeit vom Federweg s repräsentierenden Kennlinie einer Vorspann-Membranfeder;
- Fig. 4 bis 8: Detaildarstellungen von Varianten der Ausrückeranordnung mit zwei auf der Getriebeseite des Ausrückrings angeordneten Vorspann-Membranfedern
- Fig. 9: einen teilweisen Axiallängsschnitt durch eine Variante einer Ausrückerandordnung, bei welcher Enden eines Lastübertragungsrings durch eine Öffnung einer die Schnappverbindung vorspannenden Tellerfeder geführt sind;
- Fig. 10: eine Axialansicht der Tellerfeder aus Fig. 9;
- Fig. 11: einen teilweisen Axiallängsschnitt durch eine Variante der Ausrückeranordnung mit einer die Schnappverbindung vorspannenden Membranfeder; und
- Fig. 12: eine Axialansicht der Membranfeder aus Fig. 11.

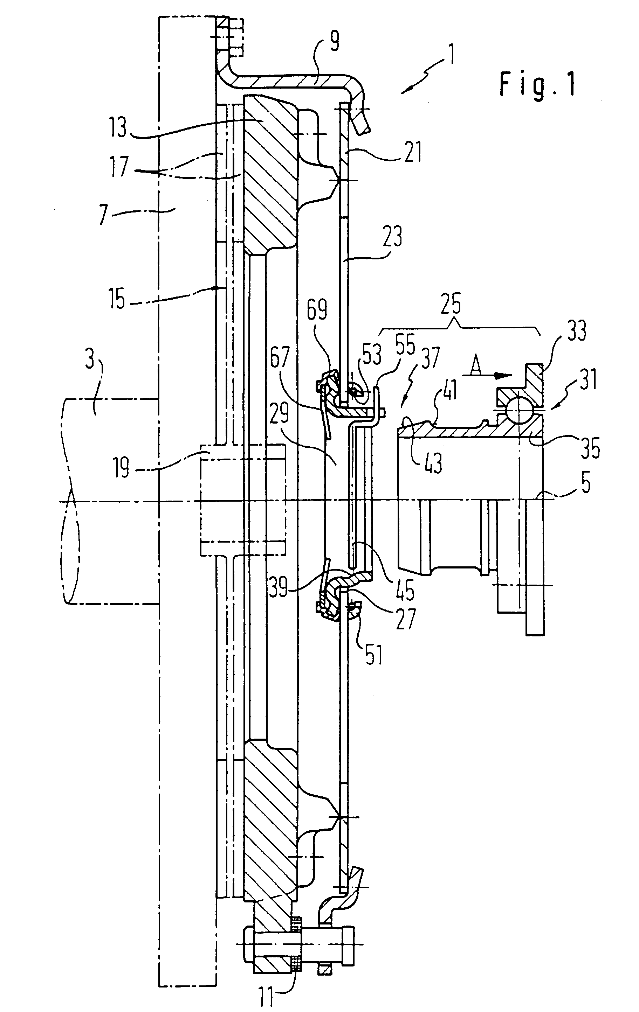

Fig. 1 zeigt schematisch eine Antriebsstrang eines Kraftfahrzeugs zwischen dessen Brennkraftmaschine und Getriebe angeordnete Reibungskupplung 1. Die Reibungskupplung 1 umfaßt ein an einer Kurbelwelle 3 der Brennkraftmaschine gleichachsig zu deren Drehachse 5 befestigtes Schwungrad 7, ein am Schwungrad 7 gehaltenes Kupplungsgehäuse 9, an welchem über Tangentialblattfedern 11 eine Anpreßplatte 13 drehfest aber axial beweglich geführt ist. Zwischen der Anpreßplatte 13 und dem Schwungrad 7 ist eine Kupplungsscheibe 15 mit ihren Reibbelägen 17 einspannbar. Die Kupplungsscheibe 15 hat eine Nabe 19, die mit einer nicht näher dargestellten Getriebeeingangswelle eines der Kurbelwelle 3 bzw. der Brennkraftmaschine axial gegenüberliegend angeordneten Getriebes des Kraftfahrzeugs kuppelbar ist. Das Schwungrad 7 und/oder die Kupplungsscheibe 15 können in herkömmlicher Weise mit einem Drehschwingungsdämpfer versehen sein. Zwischen dem Kupplungsgehäuse 9 und der Anpreßplatte 13 ist eine Kupplungshauptfeder, hier eine Membranfeder 21 eingespannt, die eine Vielzahl von deren Innenumfang radial nach innen abstehende, durch radial verlaufende Schlitze voneinander getrennte Federzungen 23 hat. Die Membranfeder 21 spannt die Reibbeläge 17 der Kupplungsscheibe 15 zwischen der Anpreßplatte 13 und dem Schwungrad 7 ein. Die Federzungen 23 bilden Ausrückelemente, über die die Reibungskupplung 1 ausgekuppelt werden kann, wenn die Federzungen 23 mittels einer allgemein mit 25 bezeichneten Ausrückeranordnung in Richtung eines Pfeils A vom Schwungrad 7 weggezogen werden. Um dies zu ermöglichen, stützt sich die Membranfeder 21 mit ihrem Außenumfang am Kupplungsgehäuse 9 und auf einem kleineren Durchmesser an der Anpreßplatte 13 ab. Auf die Ausrückeranordnung 25 wirkende Komponenten eines Kupplungsbetätigungssystems sind nicht dargestellt.

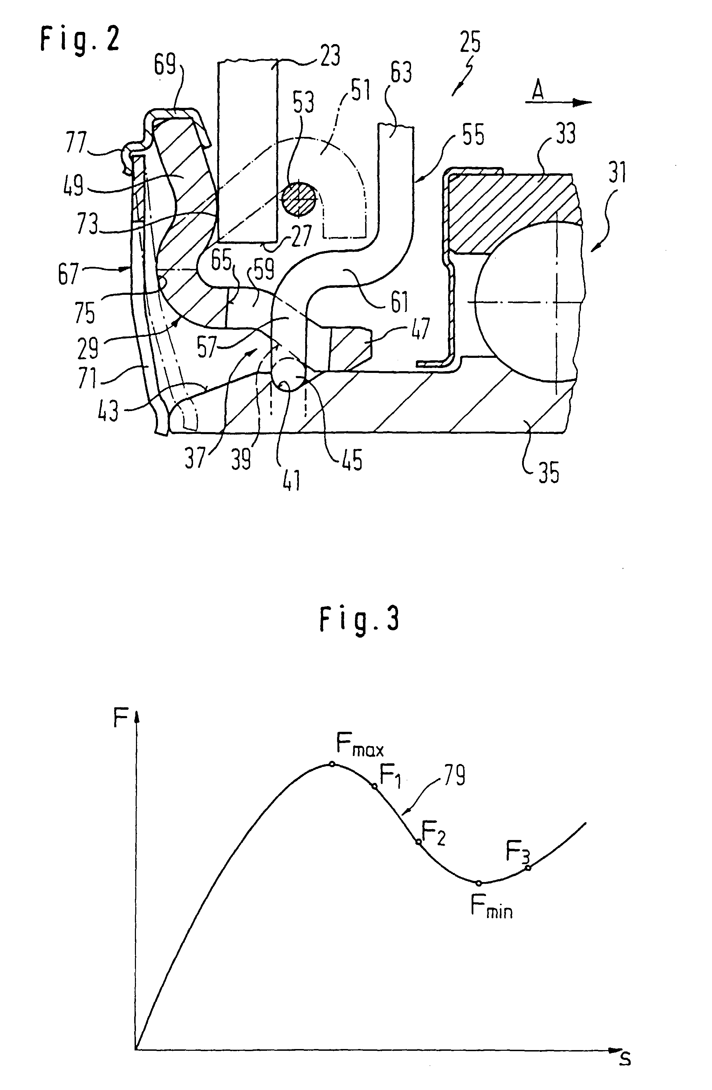

Die Ausrückeranordnung 25 umfaßt einen an den radial inneren Enden der eine zentrische Durchtrittsöffnung 27 für die nicht näher dargestellte Getriebeeingangswelle definierenden Federzungen 23 befestigten Ausrückring 29 sowie ein Ausrücklager 31 mit einem nicht rotierenden äußeren Lagerring 33, an welchem das nicht näher dargestellte Kupplungsbetätigungssystem angreift und einem rotierenden, inneren Lagerring 35. Der rotierende Lagerring 35 ist über allgemein mit 37 bezeichnete Schnappverbindungsmittel mit dem Ausrückring 29 kuppelbar. Fig. 1 zeigt hierbei die Schnappverbindungsmittel 37 vor dem Zusammenbau, während Fig. 2 die geschlossenen Schnappverbindungsmittel zeigt.

Zur Bildung der Schnappverbindungsmittel 37 ist an dem Innenumfang des Ausrückrings 29 eine zum Ausrücklager 31 hin sich verjüngende, im wesentlichen konische Kraftübertragungs-Ringfläche 39 angeformt, während der rotierende Lagerring 35 an seinem Außenumfang eine zur Kurbelwelle hin sich bogenförmig oder konisch verlaufend erweiternde Kraftübertragungs-Ringfläche 41 hat. Die Kraftübertragungs-Ringfläche 41 setzt sich zum kurbelwellenseitigen Stirnende des inneren Lagerrings 35 hin in einer sich verjüngenden Konusfläche 43 fort. In dem Ausrückring 29 ist ein radial federnder Lastübertragungsring 45 angeordnet, der, wie am besten Fig. 2 zeigt, bei geschlossenen Schnappverbindungsmitteln 37 zwischen den Kraftübertragungs-Ringflächen 39, 41 liegt, so daß die Ausrückzugkraft in Richtung des Pfeils A vom Ausrücklager 31 auf die Federzunge 23 übertragen werden kann.

Der Ausrückring 29 hat, wie Fig. 2 zeigt, einen im wesentlichen axial sich erstreckenden Ringbereich 47, dessen Innenumfang die Kraftübertragungs-Ringfläche 39 bildet und einen die Federzungen 23 auf der Motorseite hintergreifenden, radial abstehenden, im wesentlichen ringförmigen Flansch 49. Der Ausrückring 29 greift mit mehreren, in Umfangsrichtung verteilten Krallen 51 durch die Schlitze zwischen benachbarten Federzungen 23 hindurch und ist auf der Getriebeseite der Federzungen 23 mittels eines in die Krallen eingreifenden Halterings 53 an den Federzungen 23 befestigt. Der Lastübertragungsring 45 ist als offener radial federnder Ring ausgebildet, dessen Enden 55, wie am besten Fig. 2 zeigt, zunächst mit einem Abschnitt 57 im wesentlichen in der Ebene des Lastübertragungsrings 45 radial nach außen durch eine Öffnung 59 des axial verlaufenden Ringbereichs 47 treten, dann mit einem Abschnitt 61 axial zum Ausrücklager 31 hin abbiegen, um danach zwischen den Federzungen 23 und dem Ausrücklager 31 erneut nach radial außen in einem Abschnitt 63 zu verlaufen.

Vor der Montage des Ausrücklagers 31 liegt der Lastübertragungsring 45 im wesentlichen lose in dem Ringbereich 47. Bei der Montage wird der innere Lagerring 35 in den Ringbereich 47 eingesteckt, wobei die Konusfläche 43 den mit seinem Abschnitt 57 am Rand 65 der Öffnung 59 anschlagenden Lastübertragungsring 45 aufweitet, bis der Lastübertragungsring 45 aufgrund seiner Eigenspannung hinter die Lastübertragungs-Ringfläche 41 einschnappt. Das Ausrücklager 31 kann dann in Richtung des Pfeils A gezogen werden, bis der Lastübertragungsring 45 auch die Lastübertragungs-Ringfläche 39 kontaktiert. Bei der solchermaßen geschlossenen Schnappverbindung verlaufen die Enden 55 des Lastübertragungsrings 45 berührungsfrei sowohl durch die Öffnung 49 als auch berührungsfrei bezogen auf die übrigen Komponenten der Ausrückeranordnung 25.

Um zu verhindern, daß der Kraftübertragungskontakt zwischen dem Lastübertragungsring 45 einerseits und den Kraftübertragungs-Ringflächen 39 und 41 andererseits verlorengeht, was zu erhöhtem Verschleiß an den Komponenten der Ausrückeranordnung 25 führen würde, ist auf der Motorseite des Ausrückrings 29 eine Membranfeder 67 vorgesehen, die an ihrem Außenumfang mittels eines Stützrings 69 am Flansch 49 gehalten ist und mit ihren Federzungen 71 unter Vorspannung am motorseitigen Stirnende des rotierenden, inneren Lagerrings 35 des Ausrücklagers 31 anliegt. Die Membranfeder 67 belastet damit unabhängig von eventuellen Kräften des Kupplungsbetätigungssystems die Schnappverbindungsmittel 37 in Schließrichtung. Trotz eventueller Vibrationen der Brennkraftmaschine wird damit ein dauernder Anlagekontakt der Schnappverbindungsmittel 37 gewährleistet.

Der Flansch 49 liegt zur Verschleißminderung mit einer Wölbung 73 an den Federzungen 23 an. Die Wölbung 73 setzt sich nach radial innen hin in eine entgegengesetzte, zweite Wölbung 75 fort, während sie nach radial außen von den Federzungen 23 axial weggerichtet verläuft. Der die Membranfeder 67 mittels einer Stützkante 77 hintergreifende Stützring 69 kann auf diese Weise durch Umbördeln am Außenumfang des Flansches 49 des Ausrückrings 29 befestigt werden.

Wie in Fig. 2 strichpunktiert angedeutet, liegt die Membranfeder 67 bei noch nicht montiertem Ausrücklager 31 unter Vorspannung an der Wölbung 75 an. Auf diese Weise kann die für die Montage des Ausrücklagers 31 erforderliche Axialkraft gezielt beeinflußt werden und zugleich eine definierte Vorspannung bei geschlossener Schnappverbindung erzeugt werden. Fig. 3 zeigt die Federkraft-Federweg-Kennlinie der Membranfeder 67, deren Federkraft F mit wachsendem Federweg s zunächst auf einen maximalen Kraftwert Fₘₐₓ ansteigt, dann längs eines abfallenden Asts 79 auf einen minimalen Wert Fₘᵢₙ abnimmt, um dann wieder zuzunehmen. Die Membranfeder 67 ist so eingebaut, daß sie bei noch nicht montiertem Ausrücklager 31 auf einen Wert F₁ des absteigenden Asts 79 vorgespannt ist, das Kraft-maximum Fₘₐₓ also bereits überwunden ist. F₂ bezeichnet die Vorspannung der Membranfeder 67 bei montiertem Ausrücklager 31. Auch dieser Wert liegt auf dem absteigenden Ast 79 der Kennlinie, jedoch zum Minimum Fₘᵢₙ hin verschoben. Die Vorspannkraft der Membranfeder 67 mindert sich damit während der Montage des Ausrücklagers, was die Montage erleichtert. Während der Montage wird der Lagerring 35 über die durch F₂ bestimmte Betriebsstellung hinaus eingeschoben, wobei sich die Vorspannung der Membranfeder 67 über Fₘᵢₙ hinaus geringfügig auf den nachfolgenden, ansteigenden Ast bis zur Vorspannung F₃ wieder erhöhen kann. Nach der Montage des Ausrücklagers 31 wandert dieses aufgrund der Vorspannung der Membranfeder 67 in Richtung des Pfeils A zurück, wodurch sich die Vorspannung erneut auf den Wert F₂ erhöht. Die Federkraft F₂ reicht aus, um während des Betriebs der Reibungskupplung eine sichere Anlage zwischen dem Lastübertragungsring 45 und den Kraftübertragungs-Ringflächen 39, 41 sicherzustellen, so daß an dieser Stelle kein Verschleiß entstehen kann. Aufgrund der Vorspannung der Membranfeder 67 vor Montage des Ausrücklagers 31 wird sichergestellt, daß während des Montagevorgangs keine ungünstig hohen Federkräfte zu überwinden sind.

Es sei darauf hingewiesen, daß anstelle der Membranfeder 21 auch andere Ausführungsformen einer Kupplungshauptfeder vorgesehen sein können, beispielsweise eine Kupplungshauptfeder, die mit gesonderten Ausrückhebeln ausgerüstet ist. Ferner kann die Gestaltung des Lastübertragungsrings 45 und seiner Enden 55 von der dargestellten Ausführungsform abweichen und auch die Fixierung des Ausrückrings 29 an den Ausrückelementen kann abweichend gelöst sein, ohne die Grundidee der Erfindung, die lösbare Schnappverbindung durch ein zusätzliches Vorspannelement in sich vorzuspannen, verlassen wird.

Im folgenden werden Varianten von Ausrückeranordnungen beschrieben, die sich in erster Linie durch die Art und Anordnungsweise des die Schnappverbindungsmittel axial vorspannenden, federnden Vorspannelements unterscheiden. Gleichwirkende Komponenten sind mit den Bezugszahlen der Fig. 1 und 2 bezeichnet und zur Unterscheidung mit einem Buchstaben versehen. Soweit Varianten nachfolgend erläuterter Ausrückeranordnungen beschrieben werden, so werden auch hier gleichwirkende Komponenten mit zuvor benutzten Bezugszahlen und einem unterscheidenden Buchstaben bezeichnet. Zur Erläuterung dieser Komponenten und ihrer Wirkungsweise wird jeweils auf die vorangegangene Beschreibung Bezug genommen.

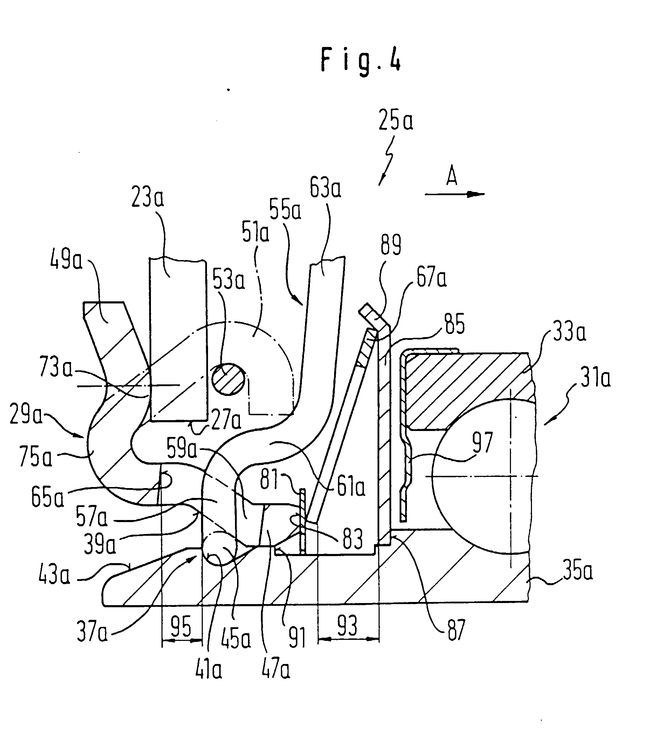

Die Ausrückeranordnung 25a aus Fig. 4 unterscheidet sich von der Anordnung aus Fig. 2 in erster Linie dadurch, daß das wiederum durch eine scheibenförmige Feder, beispielsweise eine Tellerfeder, hier jedoch eine Membranfeder 67a gebildete Vorspannelement auf der Getriebeseite der Federzungen 23a angeordnet ist und sich über eine den rotierenden inneren Lagerring 35a umschließende Scheibe 81 mit seinem Innenumfang an einer axialen Stirnfläche 83 des Ringbereichs 47a des Ausrückrings 29a abstützt. Mit ihrem Außenumfang ist die Membranfeder 67a an einer Scheibe 85 abgestützt, die ihrerseits auf einem zur Stirnfläche 83 des Ausrückrings 29a weisenden Absatz 87 des Lagerrings 35a abgestützt ist. Die Scheibe 85 trägt an ihrem Außenumfang Zentriermittel 89 für die Membranfeder 67a. Aufgrund ihrer leicht konischen Form kann die Membranfeder 67a in den Bauraum radial innerhalb der axialen Abbiegungen 61a der Enden 55a des Lastübertragungsrings 45a hineinreichen, was den in axialer Richtung benötigten Bauraum der Ausrückeranordnung 25a verrinqert.

Die Scheibe 81 kann gegebenenfalls entfallen, wenn die Membranfeder 67a direkt an der Stirnfläche 83 aufliegt. Die Scheibe 81 ermöglicht aber einerseits größere radiale Durchmesseränderungen des Innenumfangs der Membranfeder 67a über deren Federweg und andererseits kann die Scheibe 81, wie in Fig. 4 dargestellt, zur axialen Sicherung und Vormontage der Membranfeder 67a am Lagerring 35a ausgenutzt werden. Der Innenring 35a ist hierzu mit einem zum Absatz 87 weisenden Absatz 91 versehen, über den die Scheibe 81 unter elastischer Verformung mit ihrem Innendurchmesser geschnappt ist. Um die Schnappverbindungsmittel 37a in jedem Fall sicher montieren zu können, ist der bei 93 eingezeichnete Restfederweg der Membranfeder 67a bei montiertem Ausrücklager 31a größer gehalten als der bei 95 eingezeichnete Abstand zwischen der Kante 65a und dem bei der Montage daran anschlagenden Abschnitt 57a der Enden 55a des Lastübertragungsrings 45a. Damit ist sichergestellt, daß während der Montage des Ausrücklagers 31a, während der der Abschnitt 57a an der Kante 65a anliegt, der Federweg 93 ausreicht, um den Lastübertragungsring 45a über die Konusfläche 43a hinweg in die in Fig. 4 dargestellte Betriebsstellung zu bringen. Der Federweg 93 kann auf diese Weise analog zur Ausführungsform der Fig. 2 benutzt werden, um den Schließvorgang der Schnappverbindungsmittel auf dem abfallenden Ast der Federkennlinie durchzuführen. Auch hier kann also von der durch die Tellerfedereigenschaften bzw. Membranfedereigenschaften bestimmten Kennlinie Gebrauch gemacht werden, um den Zusammenbau der Schnappverbindung erheblich zu erleichtern. Es versteht sich, daß bei geeigneter Bemessung des Absatzes 91 und insbesondere des axialen Abstands der Absätze 87 und 91 auch hier bereits vor der Montage des Ausrücklagers 31a am Ausrückring 29a für eine Vorspannung der Membranfeder 67a gesorgt werden kann.

Die Scheibe 85 verläuft mit engem axialen Abstand vor einer Dichtscheibe 97, die sich vom äußeren Lagerring 33 auf der dem Ausrückring 29a zugewandten Seite radial bis dicht an den inneren Lagerring 35a heran erstreckt. Die Scheiben 85, 97 bilden eine Labyrinthdichtung für das Ausrücklager 31a, wobei die Scheibe 85 neben ihrer Abstütz- und Zentrierfunktion noch eine Dichtungsfunktion hat.

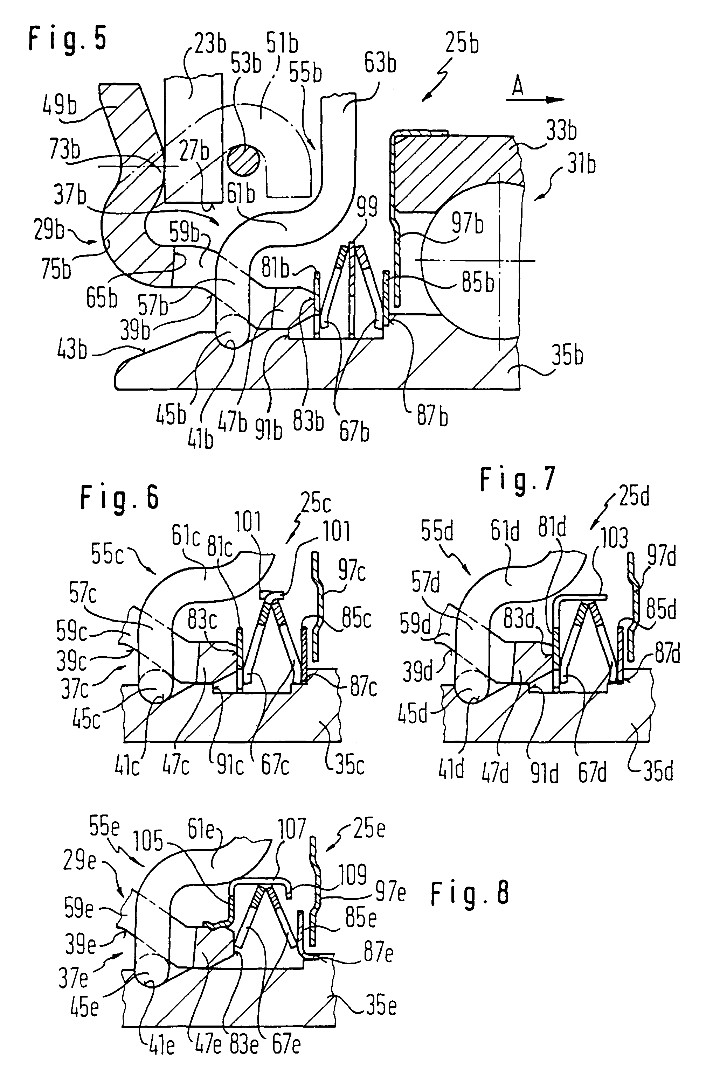

Die in den Fig. 5 bis 8 dargestellten Ausrückeranordnungen unterscheiden sich von der Anordnung der Fig. 4 in erster Linie dadurch, daß anstelle einer einzigen Teller- oder Membranfeder jeweils zwei derartige Federelemente vorgesehen sind, die an ihrem Außenumfang aneinander abgestützt sind und mit ihrem Innenumfang zwischen dem Ausrückring einerseits bzw. dem Innenring des Ausrücklagers andererseits eingespannt sind. Es versteht sich, daß gegebenenfalls auch mehrere dieser Federpaare in Reihe hintereinander angeordnet sein können.

Fig. 5 zeigt zwei teller- oder membranfederförmige Federelemente 67b, die sich an ihrem Außenumfang über eine Zwischenscheibe 99 aneinander abstützen. Die Zwischenscheibe 99 ermöglicht eine definierte Auflage der beiden Federelemente 67b aneinander. Die Scheibe 81b stützt das motorseitige Federelement 67b an der Stirnfläche 83b des Ausrückrings 29b ab und hält die Federelemente 67b unverlierbar am Lagerring 35b. Die Scheibe 85b hat einen geringeren Durchmesser als in der Variante der Fig. 4 und wird lediglich zur Abstützung des getriebeseitigen Federelements 67b sowie zur Abdichtung des Ausrücklagers 31b ausgenutzt. Durch die Hintereinanderschaltung mehrerer Federelemente 67b kann deren Außendurchmesser so klein gehalten werden, daß sie im wesentlichen radial innerhalb des durch den axial verlaufenden Bereichs 61b der Enden 55b des Lastübertragungsrings 45b verlaufen. Dies ermöglicht eine axial und radial sehr raumsparende Unterbringung der Federelemente 67b.

Die Ausrückeranordnung 25c gemäß Fig. 6 unterscheidet sich von der Anordnung aus Fig. 5 in erster Linie dadurch, daß anstelle der Zwischenscheibe die wiederum als Teller- oder Membranfeder ausgebildeten Federelemente 67c an ihrem Außenumfang mehrere in Umfangsrichtung gegeneinander versetzte, axial abstehende Lappen 101 tragen, die in Zwischenräume zwischen den Lappen 101 des jeweils anderen Federelements 67c greifen und die Federelemente 67c radial aneinander führen. Das getriebeseitige Federelement 67c kann, wie in Fig. 6 angedeutet, gegebenenfalls an dem Absatz 87c des Lagerrings 35c zentriert sein.

Bei der Ausrückeranordnung 25d in Fig. 7 liegen die teller bzw. membranfederartigen Federelemente 67d im Bereich ihres Außenumfangs direkt aneinander und werden zueinander in radialer Richtung durch axial verlaufende Lappen 103 eines von den Federelementen 67d gesonderten Bauteils, hier der das motorseitige Federelement 67d an der Stirnfläche 83d abstützenden Scheibe 81d, relativ zueinander zentriert. Die Gesamtzentrierung der Anordnung kann auch hier wieder über das getriebeseitige Federelement 67d am Absatz 87d des Lagerrings 35d erfolgen. Die Scheibe 81d kann, wie bei den vorstehend erläuterten Varianten der Fig. 4 bis 6 beschrieben, zur axialen Sicherung und Vormontage der Federelemente ausgenutzt werden.

Bei den vorstehend erläuterten Varianten der Fig. 4 bis 7 sind die Federelemente am inneren, rotierenden Lagerring des Ausrücklagers vormontiert bzw. axial gesichert. Fig. 8 zeigt eine Variante, bei der auf den Außenumfang des Ringbereichs 47e des Ausrückrings 29e ein Zentrierblech 105 axial fest aufgesetzt ist, das an seinem Außenumfang mehrere in Umfangsrichtung versetzte, axial zum Ausrücklager hin abstehende Lappen 107 trägt. Die Lappen 107 übergreifen die an ihrem Außenumfang aneinander abgestützten, teller- oder membranfederartigen Federelemente 67e und zentrieren diese relativ zueinander und zum Ausrückring 29e. Die dem Ausrückring 29e abgewandten Enden 109 der Lappen 107 sind nach radial innen gebogen und sichern die Federelemente 67e in axialer Richtung. Während das getriebeseitige Federelement 67e wiederum an einer am Lagerring 35e abgestützten Scheibe 85e mit seinem Innenumfang abgestützt ist, liegt das motorseitige Federelement 67e direkt an der Stirnfläche 83e des Ringbereichs 47e an.

Wenngleich nicht zu jeder Ausführungsform erwähnt, so bilden doch die stets vorhandenen, am inneren Lagerring abgestützten Scheiben zusammen mit der Dichtscheibe des äußeren Lagerrings jeweils eine Labyrinthdichtung für das Ausrücklager.

Als Variante der Befestigung des Ausrückrings 29 gemäß Fig. 1 an den Enden der Membranfederzungen 23 können aus dem Flansch 49 des Ausrückrings 29 mehrere in Umfangsrichtung verteilte Zungen in axialer Richtung ausgestellt sein. Die Zungen greifen hierbei in die radial verlaufenden Schlitze zwischen benachbarten Membranfederzungen 23 und fixieren den Ausrückring 29 drehfest an den Membranfederzungen 23. Für die axiale Fixierung kann ein ringförmiges Federelement auf der dem Ausrücklager 31 zugewandten Seite der Federzungen 23 angeordnet sein, das mit mehreren, in Umfangsrichtung verteilten Zungen durch die Schlitze zwischen den Membranfederzungen 23 hindurchgreift und den Flansch 49 des Ausrückrings 29 von radial außen her hintergreift. Es versteht sich, daß diese Art der Fixierung des Ausrückrings an den Membranfederzungen auch bei den Varianten der Fig. 2 bis 10 eingesetzt werden kann.

Bei den vorstehend erläuterten Ausführungsformen der Ausrückeranordnung ist das zur Verspannung der Schnappverbindungsmittel vorgesehene federnde Vorspannelement zwischen den Membranfederzungen gehaltenen Ausrückring einerseits und einer am rotierenden, inneren Lagerring des Ausrücklagers abgestützten Scheibe andererseits eingespannt. Im folgenden werden Ausführungsbeispiele erläutert, bei welchen das Vorspannelement direkt zwischen den Membranfederzungen und der genannten Scheibe eingespannt ist. Auch in diesen Fällen ist das Vorspannelement so ausgebildet, daß es die Enden des Lastübertragungsrings der Schnappverbindungsmittel im Betrieb berührungsfrei von übrigen Komponenten der Ausrückeranordnung halten kann und zugleich für das Lösen der Schnappverbindungsmittel zugänglich hält.

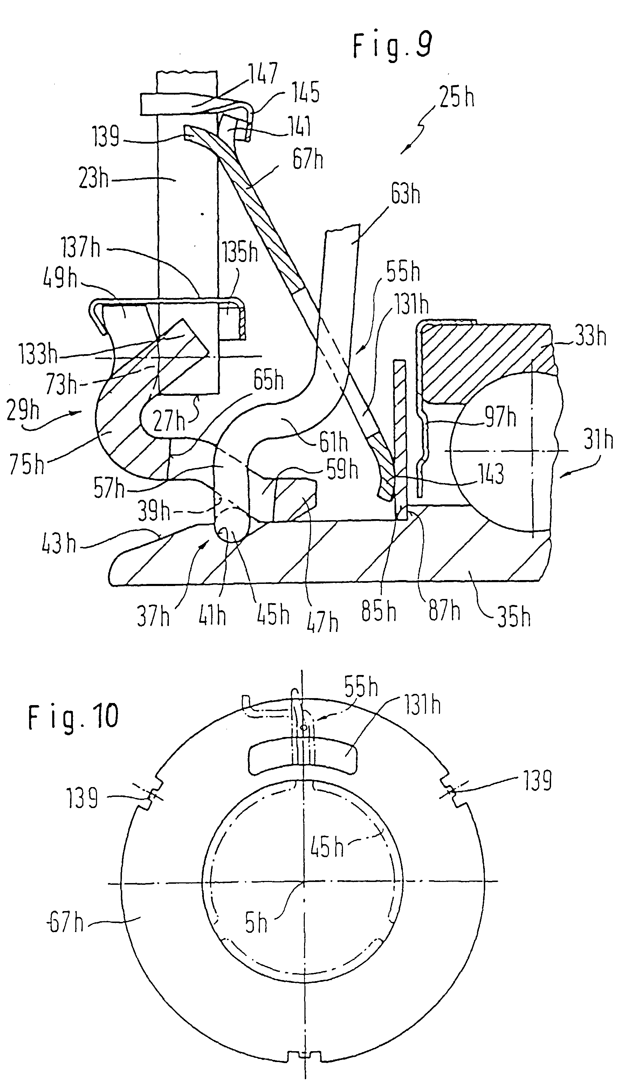

Die Fig. 9 und 10 zeigen eine Ausrückeranordnung 25h, deren Ausrückerring 29h mit Nasen 133h, die zwischen benachbarte Federzungen 23h greifen, versehen ist und mittels eines ringförmigen Federelements 135h und dessen zwischen den Federzungen 23h hindurchgreifenden Zungen 137h an den Federzungen 23h fixiert ist. Die Nasen 133h können so kurz gehalten sein, daß sie die Zwischenräume zwischen den Federzungen 23h nicht vollständig ausfüllen. Die Enden 55h des Lastübertragungsrings 45h greifen durch die im axial sich erstreckenden Bereich 47h vorgesehene Öffnung 59h, wodurch der Lastübertragungsring 45h gegenüber dem an den Membranfederzungen 23h positionierten Ausrückring 29h seinerseits positioniert wird. Die Öffnung 59h ist, ähnlich den bisher beschriebenen Varianten axial geschlossen, wodurch der Lastübertragungsring 45h unverlierbar an dem Ausrückring 29h gehalten ist.

Die Schnappverbindungsmittel 37h werden durch eine Tellerfeder 67h axial verspannt. Die Tellerfeder 67h enthält in ihrer ansonsten im wesentlichen geschlossenen Fläche einen zur Drehachse 5h konzentrisch verlaufenden Schlitz 131h, durch den die Enden 55h des Lastübertragungsrings 45h berührungsfrei hindurchtreten, so daß sie von außen her bedienbar sind. Die Tellerfeder 67h hat an ihrem Außenumfang verteilt mehrere axial abstehende Nasen 139, die gleichfalls in die Zwischenräume zwischen benachbarten Membranfederzungen eingreifen und die Zuordnung des Schlitzes 13lh zu den Enden 55h des Lastübertragungsrings 45h sicherstellen. Die Tellerfeder 67h ist an ihrem äußeren Umfang einerseits und ihrem inneren Umfang andererseits mit Auflagewölbungen 141 bzw. 143 versehen, über die sie sich an ihrem Außenumfang an den Membranfederzungen 23h und an ihrem Innenumfang an der am inneren Lagerring 35h bei 87h abgestützten Scheibe 85h abstützt. Die Wölbung 141 am Außenrand der Tellerfeder 67h umgreift ein Federelement 145, das mit Krallen 147 zwischen den Membranfederzungen 23h hindurchreicht und diese von der Rückseite her umfaßt.

Die an dem Absatz 87h des Lagerrings 35h abgestützte Scheibe 85h bildet auch hier wiederum zusammen mit der Deckscheibe 97h des äußeren Lagerrings 33h eine Labyrinthdichtunq.

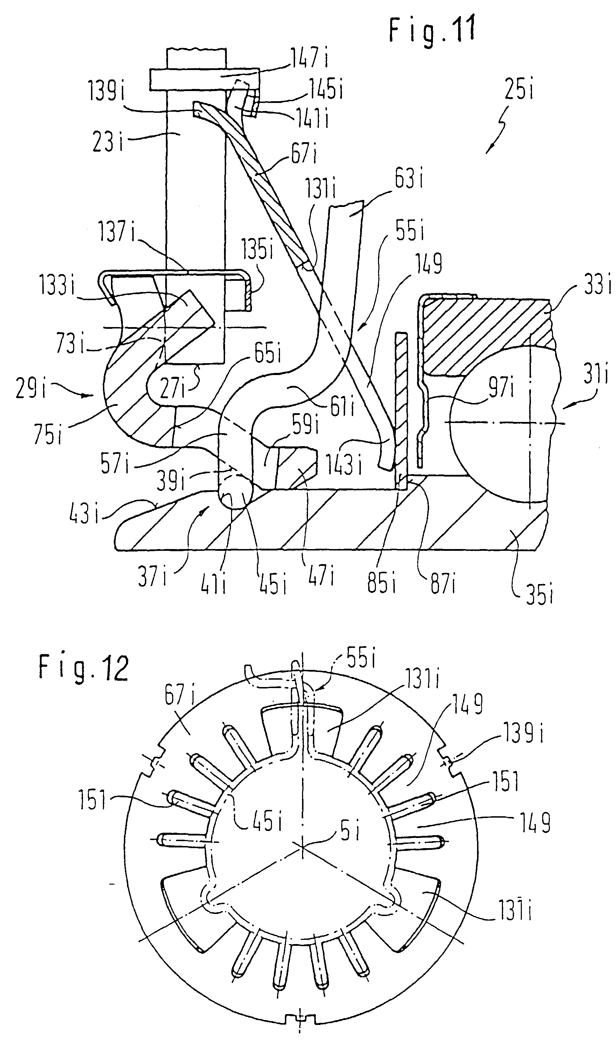

Die Fig. 11 und 12 zeigen als Variante zu Anordnungen der Fig. 9 und 10 eine Ausrückerandordnung 25i, die sich von jener Anordnung lediglich dadurch unterscheidet, daß anstelle der Tellerfeder 67h eine Membranfeder 67i mit radial nach innen weisenden Federzungen 149 zur axialen Verspannung der Schnappverbindungsmittel 37i zwischen den Membranfederzungen 23i und der am inneren Lagerring 35i abgestützten Scheibe 85i eingespannt ist. Die Membranfeder 67i ist rotationssymmetrisch aufgebaut, wobei die Federzungen 149 durch radial verlaufende Schlitze 151 voneinander getrennt sind. In Umfangsrichtung um gleiche Winkelabstände verteilt sind verbreiterte Schlitze 131i vorgesehen, von denen einer im eingebauten Zustand die Enden 55i des Lastübertragungsrings 45i berührungsfrei durchtreten läßt. Die symmetrische Ausbildung der Tellerfeder 67i sorgt für eine gleichmäßige Kraftverteilung.

## Patentansprüche

1. Ausrückeranordnung für eine im Antriebsstrang zwischen einer Brennkraftmaschine und einem Getriebe eines Kraftfahrzeugs angeordnete Reibungskupplung (1), deren zusammen mit der Reibungskupplung (1) um eine Drehachse (5) rotierende, insbesondere durch Federzungen einer Membranfeder (21) gebildete, im wesentlichen radial zur Drehachse (5) hin sich erstreckende Ausrückelemente (23) zum Ausrücken der Reibungskupplung (1) zum Getriebe hin bewegbar sind, umfassend
- einen konzentrisch zur Drehachse (5) an den Ausrückelementen (23) befestigten, auf der Motorseite der Ausrückelemente (23) abgestützten Ausrückring (29),
- ein in Richtung der Drehachse (5) bewegliches Ausrücklager (31) mit einem rotierenden, insbesondere inneren Lagerring (35) und einem nicht rotierenden, insbesondere äußeren Lagerring (33) und
- axial miteinander kuppelbare Schnappverbindungsmittel (39) zwischen dem Ausrückring(29) und dem rotierenden Lagerring (35), umfassend Kraftübertragungsflächen (39, 41), insbesondere angenähert konisch verlaufende Kraftübertragungs-Ringflächen an dem Ausrückring (29) und dem rotierenden Lagerring (35) und wenigstens ein radial federndes Lastübertragungselement (45), insbesondere in Form eines radial federnden Lastübertragungsrings, welches zwischen die Kraftübertragungsflächen (39, 41) schnappbar ist,
wobei zwischen dem Ausrückring (29) oder den Ausrückelementen (23) einerseits, und dem rotierenden Lagerring (35) andererseits ein im wesentlichen axial federndes Vorspannelement (67) eingespannt ist, welches die Schnappverbindungsmittel (39) axial gegeneinander vorspannt und wenigstens ein im wesentlichen ringförmiges, axial federndes, zur Drehachse (5) konzentrisches und als Tellerfeder oder als Membranfeder mit radial abstehenden Federzungen ausgebildetes Federelement (67) umfaßt,
**dadurch gekennzeichnet,**
daß das Federelement (67) mit einer Vorspannung angeordnet ist, deren Wert bei nicht miteinander gekuppelten Schnappverbindungsmitteln (37) so bemessen ist, daß sowohl dieser Wert der Vorspannung als auch der Wert der Vorspannung des Federelements (67) bei miteinander gekuppelten Schnappverbindungsmitteln (37) auf einem Ast (79) der Federkraft-Federweg-Kennlinie des Federelements (67) liegen, in welchem die Federkraft mit wachsendem Federweg abnimmt.

2. Ausrückeranordnung nach Anspruch 1, dadurch gekennzeichnet, daß zum Schließen der Schnappverbindung die Schnappverbindungsmittel (37) über deren gekuppelte Stellung hinaus relativ zueinander in eine Schließstellung zu bewegen sind, in der der Wert die Vorspannung des Federelementes (67) ein Minimum der Kennlinie durchlaufen hat.

3. Ausrückeranordnung nach Anspruch 2, dadurch gekennzeichnet, daß das Federelement (67) auf der Motorseite des Ausrückrings (29) angeordnet ist, im Bereich seines Außenumfangs an dem Ausrückring (29) gehalten ist und im Bereich seines Innenumfangs am rotierenden Lagerring (35) abgestützt ist.

4. Ausrückeranordnung nach Anspruch 3, dadurch gekennzeichnet, daß der Ausrückring (29) einen angenähert radial abstehenden, im wesentlichen ringförmigen Flansch (49) hat, mit dem er auf der Motorseite der Ausrückelemente (23) aufliegt sowie einen im wesentlichen axial sich erstreckenden Ringbereich (47) aufweist, der in eine von den Ausrückelementen (23) radial begrenzte, zentrische Öffnung (27) hineinreicht und aut seiner inneren Umfangsfläche die Kraftübertragungs-Ringfläche (39) des Ausrückrings (29) bildet und daß am Außenumfang des Flansches (49) ein Stützring (69), insbesondere in Form eines um den Flansch herum gebördelten Blechrings angeordnet ist, der in axialem Abstand zum Flansch (49) eine ringförmige Stützkante (77) für die Abstützung des Federelements (67) aufweist.

5. Ausrückeranordnung nach Anspruch 4, dadurch gekennzeichnet, daß der Flansch (49) des Ausrückrings (29) mit einer ersten Wölbung (73) an den Ausrückelementen (23) anliegt, und daß die erste Wölbung (73) zur Drehachse (5) hin in eine zweite entgegengesetzte Wölbung (75) übergeht, an der das Federelement (67) bei nicht miteinander gekuppelten Schnappverbindungsmitteln (37) vorgespannt anliegt.

6. Ausrückeranordnung nach Anspruch 1, dadurch gekennzeichnet, daß das Vorspannelement (67a-e, h, i) auf der Getriebeseite der Ausrückelemente (23a-e, h, i) angeordnet ist, daß der Ausrückring (29a-e) einen angenähert radial abstehenden, im wesentlichen ringförmigen Flansch (49a-e) hat, mit dem er auf der Motorseite der Ausrückelemente (23a-e) aufliegt sowie einen im wesentlichen axial sich erstreckenden Ringbereich (47a-e) aufweist, der in eine von den Ausrückelementen (23a-e) radial begrenzte, zentrische Öffnung (27a-e) hineinreicht, eine zum Ausrücklager (31a-e) weisende axiale Stirnfläche (83, 83a-e) hat und auf seiner inneren Umfangsfläche die Kraftübertragungs-Ringfläche (39a-e) des Ausrückrings (29a-e) bildet, und daß das Vorspannelement (67a-e) zwischen der Stirnfläche (83, 83b-e) des Ausrückrings (29a-e) und einer axial entgegengerichteten Fläche (87; 87b-e) des rotierenden Lagerrings (35a-e) eingespannt ist.

7. Ausrückeranordnung nach Anspruch 6, aaaurcn gekennzeichnet, daß zumindest das eine Federelement (67a-e) als im wesentlichen ringscheibenförmige Tellerfeder oder Membranfeder ausgebildet ist, die mit ihrem Innenumfang an der axialen Stirnfläche (83; 83b-e) des Ausrückrings (29a-e) abgestützt ist.

8. Ausrückeranordnung nach Anspruch 7, dadurch gekennzeichnet, daß der rotierende Lagerring (35a) eine ringförmige Scheibe (85) trägt, die sich an einem axial zur Stirnfläche (83) des Ausrückrings (29a) weisenden Absatz (87a) des rotierenden Lagerrings (35a) abstützt und daß das Vorspannelement (67a) ein einziges Federelement (67a) aufweist, das sich mit seinem Außenumfang an der Scheibe (85) abstützt.

9. Ausrückeranordnung nach Anspruch 8, dadurch gekennzeichnet, daß die Scheibe (85) an ihrem Außenumfang Zentriermittel (89) für das Federelement (67a) aufweist.

10. Ausrückeranordnung nach Anspruch 7, dadurch gekennzeichnet, daß das Vorspannelement wenigstens ein Paar als Tellerfeder oder Membranfeder ausgebildete Federelemente (67b-e) aufweist, die sich an ihrem Außenumfang aneinander abstützen, und von denen ein erstes Federelement (67b-e) mit seinem Innenumfang an der Stirnfläche (83b-e) des Ausrückrings (29b-e) und ein zweites Federelement (67b-e) mit seinem Innenumfang an dem rotierenden Lagerring (35b-e) abgestützt ist.

11. Ausrückeranordnung nach Anspruch 10, dadurch gekennzeichnet, daß axial zwischen dem ersten und dem zweiten Federelement (67b) eine ringförmige Zwischenscheibe (99) angeordnet ist.

12. Ausrückeranordnung nach Anspruch 10, dadurch gekennzeichnet, daß das erste und zweite Federelement (67c) an ihrem Außenumfang axial abstehende Lappen (101) tragen, die in Aussparungen am jeweils anderen Federelement (67c) eingreifen.

13. Ausrückeranordnung nach einem der Ansprüche 10 bis 12, dadurch gekennzeichnet, daß axial zwischen dem zweiten Federelement (67b-e) und einem zur Stirnfläche (83b-e) des Ausrückrings (29b-e) weisenden Absatz (87b-e) des rotierenden Lagerrings (35b-e) eine ringförmige Scheibe (85b-e) angeordnet ist.

14. Ausrückeranordnung nach einem der Ansprüche 7 bis 13, dadurch gekennzeichnet, daß axial zwischen der Stirnfläche (83; 83b-d) des Ausrückrings (29a-d) und dem mit seinem Innenumfang an der Stirnfläche (83; 83b-d) abgestütztem Federelement (67a-d) eine ringförmige Stützscheibe (81; 81b-d) angeordnet ist, und daß der rotierende Lagerring (35a-d) auf der dem Federelement (67a-d) abgewandten Seite der Stützscheibe (81; 81b-d) einen die Stützscheibe (81; 81b-d) axial sichernden Absatz (91; 91b-d) aufweist.

15. Ausrückeranordnung nach Anspruch 14, dadurch gekennzeichnet, daß das Lastübertragungselement (45a-d) und der Ausrückring (29a-d) einander zugeordnete Anschläge (57a-d, 65a-d) bilden, die das axiale Bewegungsspiel des Lastübertragungselements (45a-d) zum Ausrücklager (31a-d) hin beim Schließen der Schnappverbindungsmittel (37a-d) auf einen Maximalwert begrenzen, der kleiner ist als ein bei geschlossenen Schnappverbindungsmitteln (37a-d) verbleibender Restfederweg des Federelements (67a-d).

16. Ausrückeranordnung nach Anspruch 14 oder 15, dadurch gekennzeichnet, daß vom Außenumfang der Stützscheibe (81d) Lappen (103) axial abstehen, die den Außenumfang jedes Federelements (67d) zu dessen Zentrierung übergreifen.

17. Ausrückeranordnung nach einem der Ansprüche 7 bis 14, dadurch gekennzeichnet, daß auf dem axial sich erstreckenden Ringbereich (47e) des Ausrückrings (29e) im Bereich von dessen Stirnfläche (83e) ein Zentrierteil (105), insbesondere ein Zentrierblechteil aufgesetzt ist, von dem Lappen (107) im wesentlichen axial abstehen, die den Außenumfang jedes Federelements (67e) zu dessen Zentrierung übergreifen.

18. Ausrückeranordnung nach Anspruch 17, dadurch gekennzeichnet, daß die Lappen (107) nach radial innen gebogene Enden (109) zur Sicherung des Federelements (67e) bei Vormontage am Ausrückring (29e) haben.

19. Ausrückeranordnung nach einem der Ansprüche 7 bis 18, dadurch gekennzeichnet, daß der Lastübertragungsring (45a-e) als offener Ring ausgebildet ist, dessen Enden (55a-e) zunächst im wesentlichen in der Ebene des offenen Rings angenähert radial nach außen verlaufen, dann axial zum Ausrücklager (31a-e) hin abgebogen sind, um dann erneut nach radial außen zu verlaufen, und daß zumindest das mit seinem Innenumfang an der axialen Stirnfläche (83; 83b-e) des Ausrückrings (29a-e) abgestützte Federelemente (67a-e) mit dem axial abgebogenen Bereich (61a-e) der beiden Enden (55a-e) des Lastübertragungsrings (45a-e) axial überlappt.

20. Ausrückeranordnung nach Anspruch 6, dadurch gekennzeichnet, daß der Ausrückring (29h, i) einen angenähert radial abstehenden, im wesentlichen ringförmigen Flansch (49h, i) hat, mit dem er auf der Motorseite der Ausrückelemente (23h, i) aufliegt, sowie einen im wesentlichen axial sich erstreckenden Ringbereich (47h, i) aufweist, der in eine von den Ausrückelementen (23h, i) radial begrenzte, zentrische Öffnung (131h, i) hineinreicht und auf seiner inneren Umfangsfläche die Kraftübertragungs-Ringfläche (39h, i) des Ausrückrings (29h, i) bildet, daß der Lastübertragungsring (45h, i) als offener Ring ausgebildet ist, dessen Enden (55h, i) zum Lösen der Schnappverbindungsmittel (37h, i) zumindest angenähert in den Raum axial zwischen dem Bereich der die zentrische Öffnung (27h, i) begrenzenden Enden der Ausrückelemente (23h, i) und dem Ausrücklager (31h, i) hineinreichen, und daß das Vorspannelement (67h, i) einen Durchlaßraum (131h, i) bildet oder begrenzt, durch den hindurch die Enden (55h, i) insbesondere berührungsfrei radial nach außen geführt sind.

21. Ausrückeranordnung nach Anspruch 20, dadurch gekennzeichnet, daß das Vorspannelement (67h, i) sich im Bereich seines Außenumfangs direkt an den Ausrückelementen (23h, i) und im Bereich seines Innenumfangs an dem rotierenden Lagerring (35h, i) abstützt.

22. Ausrückeranordnung nach Anspruch 21, dadurch gekennzeichnet, daß die Öffnung (131h) des Federeiements (67h) für den Durchtritt der Enden (55h) des Lastübertragungsrings (45h) als zur Drehachse (5h) konzentrisch verlaufender Schlitz ausgebildet ist.

23. Ausrückeranordnung nach Anspruch 21, dadurch gekennzeichnet, daß die Membranfeder (67i) radial nach innen ragende, durch radiale Schlitze (15)1 getrennte Federzungen (149) aufweist und daß die Enden (55i) des Lastübertragungsrings (45i) durch zumindest einen in Umfangsrichtung verbreiterten (131i) dieser Schlitze radial nach außen geführt sind.

24. Ausrückeranordnung nach Anspruch 23, dadurch gekennzeichnet, daß die Membranfeder (67i) mehrere in gleichen Winkelabständen voneinander angeordnete verbreiterte Schlitze (131i) hat.

25. Ausrückeranordnung nach einem der Ansprüche 21 bis 24, dadurch gekennzeichnet, daß vom Außenumfang des Federelements (67h; i) Nasen (139; 139i) axial abstehen, die zwischen die Ausrückelemente (23h, i) greifen und das Federelement (67h, i) verdrehfest fixieren.

26. Ausrückeranordnung nach einem der Ansprüche 21 bis 25, dadurch gekennzeichnet, daß das Federelement (67h, i) im Abstützbereich seines Innenumfangs und seines Außenumfangs zur Verschleißminderung entgegengesetzt gewölbt ist.

27. Ausrückeranordnung nach Anspruch 26, dadurch gekennzeichnet, daß der rotierende Lagerring (35h, i) des Ausrücklagers (31h, i) eine ringförmige Scheibe (85h, i) trägt, die sich an einem axial zur Stirnfläche des Ausrückrings (29h, i) weisenden Absatz (87h, i) des rotierenden Lagerrings (35h, i) unmittelbar neben dem Ausrücklager (31h, i) abstützt und an der sich seinerseits das Federelement (67h, i) mit seinem inneren Bereich abstützt.

28. Ausrückeranordnung nach Anspruch 26 oder 27, dadurch gekennzeichnet, daß das Federelement (67h, i) im Bereich seines Außenumfangs an den Ausrückelementen (23h, i) mittels Haltefedern (145; 145i) fixiert ist.

29. Ausrückeranordnung nach einem der Ansprüche 1 bis 28, dadurch gekennzeichnet, daß der nicht rotierende, äußere Lagerring (33; 33a, b, h, i) auf seiner den Ausrückelementen (23; 23a-e, h, i) zugewandten Seite eine nach radial innen reichende, in geringem Abstand vom rotierenden, inneren Lagerring (35; 35a-e, h, i) endende Deckscheibe (97; 97a-e, h i) trägt, und daß am rotierenden Lagerring (35; 35a-e, h, i) eine in geringem Abstand zur Deckscheibe (97; 97a-e, n, i) angeordnete Scheibe (85; 85a-e, h, i) angeordnet ist, die zusammen mit der Deckscheibe (97; 97a-e, h, i) eine Labyrinthdichtung bildet und an der das Vorspannelement (67; 67a-e, h, i) axial abgestützt ist.

## Claims

1. Release arrangement for a friction clutch (1) arranged in the drive train between an internal combustion engine and a transmission of a motor vehicle, in which the releasing elements (23), which rotate together with the friction clutch (1) about an axis of rotation (5), are formed in particular by spring tongues of a diaphragm spring (21) and extend substantially radially to the axis of rotation (5), are movable towards the transmission for release of the friction clutch (1), comprising:
- a releasing ring (29) fastened on the releasing elements (23) concentrically to the axis of rotation (5) and supported on the motor side of the releasing elements (23),
- a releasing bearing (31) movable in the direction of the axis of rotation (5), with a rotating, in particular inner bearing ring (35) and a non-rotating, in particular outer bearing ring (33) and
- snap connection means (39), which may be coupled together axially, between the releasing ring (29) and the rotating bearing ring (35), comprising force-transmitting surfaces (39, 41), in particular force-transmitting ring surfaces running approximately conically on the releasing ring (29) and the rotating bearing ring (35), and at least one radially resilient load-transmitting member (45), in particular in the form of a radially resilient load-transmitting ring, which may be snapped between the force-transmitting surfaces (39, 41),
wherein between the releasing ring (29) or the releasing elements (23), on the one hand, and the rotating bearing ring (35), on the other hand, an essentially axially resilient prestressing element (67) is clamped, which prestresses the snap connection means (39) axially relative to one another and at least one substantially ring-shaped, axially resilient spring element (67) which is concentric with the axis of rotation (5) and constructed as a cup spring or as a diaphragm spring with radially projecting spring tongues, characterised in that the spring element (67) is arranged with an initial stress, whereof the value with snap connecting means (37) not -oupled together is rated so that both this value of the initial stress as well as the value of the initial stress of the spring element (67) with snap connection means (37) coupled together, lie on a leg (79) of the spring force/spring displacement characteristic curve of the spring element (67), in which the spring force decreases as the spring displacement increases.

2. Release arrangement according to Claim 1, characterised in that for closing the snap connection, the snap connection means (37) are to be moved beyond their coupled position relative to each other into a closed position, in which the value of the initial stress of the spring element (67) has passed through a minimum of the characteristic curve.

3. Release arrangement according to Claim 2, characterised in that the spring element (67) is located on the motor side of the releasing ring (29), in the region of its outer periphery is held on the releasing ring (29) and in the region of its inner periphery is supported on the rotating bearing ring (35).

4. Release arrangement according to Claim 3, characterised in that the releasing ring (29) has an approximately radially projecting, essentially ring-shaped flange (49), by which it rests on the motor side of the releasing elements (23) as well as a ring region (47) extending essentially axially, which extends into a central opening (27) defined radially by the releasing elements (23) and on its inner peripheral surface forms the force-transmitting ring surface (39) of the releasing ring (29) and that located on the outer periphery of the flange (49) is a support ring (69), in particular in the form of a sheet metal ring beaded around the flange, which at an axial distance from the flange (49) comprises a ring-shaped support edge (77) for supporting the spring element (67).

5. Release arrangement according to Claim 4, characterised in that the flange (49) of the releasing ring (29) bears by a first curvature (73) on the releasing elements (23) and that the first curvature (73) towards the axis of rotation (5) passes into a second opposed curvature (75), against which the spring element (67) bears in a pre-stressed manner when the snap connection means (37) are not coupled together.

6. Release arrangement according to Claim 1, characterised in that the prestressing element (67a-e, h, i) is located on the transmission side of the releasing elements (23a-e, h, i), that the releasing ring (29a-e) has a substantially annular flange (49a-e) projecting approximately radially, by which it lies on the motor side of the releasing elements (23a-e), as well as a substantially axially extending ring region (47a-e), which extends into a central opening (27a-e) radially defined by the releasing elements (23a-e), has an axial end face (83, 83a-e) pointing towards the releasing bearing (31a-e) and on its inner peripheral surface forms the force-transmitting ring surface (39a-e) of the disengaging ring (29a-e) and that the prestressing element (67a-e) is clamped between the end face (83, 83b-e) of the disengaging ring (29a-e) and an axially oppositely directed surface (87; 87b-e) of the rotating bearing ring (35a-e).

7. Release arrangement according to Claim 6, characterised in that at least one spring element (67a-e) is constructed as a cup spring or diaphragm spring essentially in the shape of an annular disc, which is supported by its inner periphery on the axial end face (83; 83b-e) of the releasing ring (29a-e).

8. Release arrangement according to Claim 7, characterised in that the rotating bearing ring (35a) supports an annular disc (85), which is supported on a shoulder (87a) of the rotating bearing ring (35a) pointing axially towards the end face (83) of the releasing ring (29a) and that the prestressing element (67a) comprises a single spring element (67a), which is supported by its outer periphery on the disc (85).

9. Release arrangement according to Claim 8, characterised in that on its outer periphery the disc (85) comprises centering means (89) for the spring element (67a).

10. Release arrangement according to Claim 7, characterised in that the prestressing element comprises at least one pair of spring elements (67b-e) constructed as cup springs or diaphragm springs, which are supported against each other on their outer periphery and whereof a first spring element (67b-e) is supported by its inner periphery on the end face (83b-e) of the releasing ring (29b-3) and a second spring element (67b-e) is supported by its inner periphery on the rotating bearing ring (35b-e).

11. Release arrangement according to Claim 10, characterised in that an annular intermediate disc (99) is located axially between the first and the second spring element (67b).

12. Release arrangement according to Claim 10, characterised in that the first and second spring element (67c) support axially projecting lugs (101) on their outer periphery, which lugs engage in recesses on the respective other spring element (67c).

13. Release arrangement according to one of Claims 10 to 12, characterised in that an annular disc (85b-e) is located axially between the second spring elements (67b-e) and a shoulder (87b-e) of the rotating bearing ring (35b-e) pointing towards the end face (83b-e) of the releasing ring (29b-e).

14. Release arrangement according to one of Claims 7 to 13, characterised in that an annular support disc (81; 81b-d) is located axially between the end face (83; 83b-d) of the releasing ring (29a-d) and the spring element (67a-d) supported by its inner periphery on the end face (83; 83b-d) and that on the side of the support disc (81; 81b-d) remote from the spring element (67a-d), the rotating bearing ring (35a-d) comprises a shoulder (91; 91b-d) axially securing the support disc (81; 81b-d).

15. Release arrangement according to Claim 14, characterised in that the load-transmitting element (45a-d) and the releasing ring (29a-d) form stops (57a-d, 65a-d) associated with each other, which restrict the axial motion clearance of the load-transmitting element (45a-d) towards the releasing bearing (31a-d), at the time of closing of the snap connection means (37a-d), to a maximum value, which is less than a residual spring displacement of the spring element (67a-d) remaining when the snap connection means (37a-d) are closed.

16. Release arrangement according to Claim 14 or 15, characterised in that projecting axially from the outer periphery of the support disc (81d) are lugs (103), which engage over the outer periphery of each spring element (67d) for its centering.

17. Release arrangement according to one of Claims 7 to 14, characterised in that mounted on the axially extending ring region (47e) of the releasing ring (29e), in the region of its end face (83e), is a centering part (105), in particular a centering sheet metal part, from which lugs (107) project essentially axially, which engage over the outer periphery of each spring element (67e) for its centering.

18. Release arrangement according to Claim 17, characterised in that the lugs (107) have ends (109) bent radially inwards for securing the spring element (67e), at the time of pre-mounting on the releasing ring (29e).

19. Release arrangement according to one of Claims 7 to 18, characterised in that the load-transmitting ring (45a-e) is constructed as an open ring, whereof the ends (55a-e) extend approximately radially outwards first of all essentially in the plane of the open ring, then are bent axially towards the releasing bearing (31a-e), in order then once again to extend radially outwards and that at least the spring element (67a-e) supported by its inner periphery on the axial end face (83; 83b-e) of the releasing ring (29a-e) overlaps axially with the axially bent region (61a-e) of the two ends (55a-e) of the load-transmitting ring (45a-e).

20. Release arrangement according to Claim 6, characterised in that the releasing ring (29h, i) has a substantially annular flange (49h, i) projecting approximately radially, by which it lies on the motor side of the releasing elements (23h, i), and also has a substantially axially extending ring region (47h, i), which extends into a central opening (131h, i) radially defined by the releasing elements (23h, i) and on its inner peripheral surface forms the force-transmitting ring surface (39h, i) of the releasing ring (29h, i), that the load-transmitting ring (45h, i) is constructed as an open ring, whereof the ends (55h, i) extend axially at least approximately into the space between the region of the ends of the releasing elements (23h, i) and the releasing bearing (31h, i) defining the central opening (27h, i) for release of the snap connection means (37h, i), and that the prestressing element (67h, i) forms or defines a passage space (131h, i), through which the ends (55h, i) are directed radially outwards and in particular without contact.

21. Release arrangement according to Claim 20, characterised in that the prestressing element (67h, i) is supported in the region of its outer periphery directly on the releasing elements (23h, i) and in the region of its inner periphery on the rotating bearing ring (35h, i).

22. Release arrangement according to Claim 21, characterised in that the opening (131h) of the spring element (67h) is constructed for the passage of the ends (55h) of the load-transmitting ring (45h) as a slot extending concentric with the axis of rotation (5h).

23. Release arrangement according to Claim 21, characterised in that the diaphragm spring (67i) comprises spring tongues (149) projecting radially inwards and separated by radial slots (151) and that the ends (55i) of the load-transmitting ring (45i) are directed radially outwards through at least one of these slots (131i) enlarged in the peripheral direction.

24. Release arrangement according to Claim 23, characterised in that the diaphragm spring (67i) has a plurality of enlarged slots (131i) arranged at the same angular distances apart.

25. Release arrangement according to one of Claims 21 to 24, characterised in that projecting axially from the outer periphery of the spring element (67h; i) are lugs (139; 139i), which engage between the releasing elements (23h, i) and fix the spring element (67h, i) so that it is not able to rotate.

26. Release arrangement according to one of Claims 21 to 25, characterised in that in the support region of its inner periphery and its outer periphery, in order to reduce wear, the spring element (67h, i) is curved in the opposite direction.

27. Release arrangement according to Claim 26, characterised in that the rotating bearing ring (35h, i) of the release bearing (31h, i) supports an annular disc (85h, i), which is supported on a shoulder (87h, i) of the rotating bearing ring (35h, i) pointing axially towards the end face of the releasing ring (29h, i), directly beside the releasing bearing (31h, i) and against which, in turn, the spring element (67h, i) is supported by its inner region.

28. Release arrangement according to Claim 26 or 27, characterised in that in the region of its outer periphery, the spring element (67h, i) is fixed on the releasing elements (23h, i) by means of retaining springs (145; 145i).

29. Release arrangement according to one of Claims 1 to 28, characterised in that on its side facing the releasing elements (23; 23a-e, h, i), the non-rotating, outer bearing ring (33; 33a, b, h, i) supports a cover disc (97; 97a-e, h, i) extending radially inwards and terminating at a short distance from the rotating inner bearing ring (35; 35a-e, h, i), and that a disc (85; 85a-e, h, i) which is arranged at a short distance from the cover disc (97; 97a-e, h, i), forms a labyrinth seal together with the cover disc (97; 97a-e, h, i) and on which the prestressing element (67; 67a-e, h, i) is axially supported, is arranged on the rotating bearing ring (35; 35a-e, h, i).

## Revendications

1. Dispositif de débrayage pour un embrayage à friction (1) placé sur la ligne d'entraînement entre un moteur à combustion interne et une boîte de vitesses d'un véhicule, dont les éléments de débrayage (23), formés en particulier par des lames flexibles d'un ressort à membrane (21), tournant autour d'un axe de rotation (5) avec l'embrayage à friction et s'étendant pour l'essentiel dans le sens radial en direction de l'axe de rotation (5), sont mobiles en direction de la boîte de vitesses pour débrayer l'embrayage à friction (1), comprenant :
- une bague de débrayage (29) fixée sur les éléments de débrayage (23) de manière concentrique à l'axe de rotation (5) et appuyée sur le côté moteur des éléments de débrayage (23),
- une butée de débrayage (31) mobile dans la direction de l'axe de rotation (5), avec une bague rotative, en particulier intérieure (35), et une bague non rotative, en particulier extérieure (33), et
- des moyens de liaison par encliquetage (39) se couplant de manière axiale les uns aux autres entre la bague de débrayage (29) et la bague rotative (35), comprenant des surfaces de transmission de force (39, 41), en particulier des surfaces annulaires de transmission de force sensiblement coniques sur la bague de débrayage (29) et sur la bague rotative (35), et au moins un élément de transfert de charge (45) flexible dans le sens radial, en particulier sous la forme d'une bague de transfert de charge flexible dans le sens radial, qui est enclenchable entre les surfaces de transmission de force (39, 41),
un élément de précontrainte (67) pour l'essentiel flexible dans le sens axial et sensiblement annulaire étant inséré entre la bague de débrayage (29) ou les éléments de débrayage (23) d'une part et la bague rotative (35) d'autre part, élément de précontrainte qui précontraint dans le sens axial les moyens de liaison par encliquetage (39) les uns contre les autres et qui comprend au moins un élément à ressort (67) pour l'essentiel annulaire, élastique dans le sens axial, concentrique à l'axe de rotation (5) et conformé en rondelle ressort ou en ressort à membrane avec des lames en saillie radiale,
caractérisé en ce que
l'élément à ressort (67) est placé sous une précontrainte, dont la valeur, quand les moyens de liaison par encliquetage (37) ne sont pas couplés mutuellement, doit être choisie en sorte que cette valeur de la précontrainte et la valeur de la précontrainte de l'élément à ressort (67) se trouvent, quand les moyens de liaison par encliquetage (37) sont couplés mutuellement, sur une branche (79) de la courbe caractéristique force de ressort-course de ressort de l'élément à ressort (67) sur laquelle la force de ressort décroît quand la course de ressort augmente.

2. Dispositif de débrayage selon la revendication 1, caractérisé en ce que, pour verrouiller la liaison par encliquetage, les moyens de liaison par encliquetage (37) peuvent être déplacés relativement les uns aux autres au-delà de leur position accouplée jusqu'à une position de verrouillage, dans laquelle la valeur de la précontrainte de l'élément à ressort (67) a dépassé un minimum de la courbe caractéristique.

3. Dispositif de débrayage selon la revendication 2, caractérisé en ce que l'élément à ressort (67) est placé du côté moteur de la bague de débrayage (29), est tenu au niveau de sa circonférence extérieure sur la bague de débrayage (29) et est soutenu au niveau de sa circonférence intérieure sur la bague rotative (35).

4. Dispositif de débrayage selon la revendication 3, caractérisé en ce que la bague de débrayage (29) possède une bride (49) sensiblement annulaire en saillie sensiblement radiale, par laquelle elle s'appuie sur le côté moteur des éléments de débrayage (23), ainsi qu'une zone annulaire (47) d'extension sensiblement axiale, qui s'introduit dans une ouverture centrée (27) délimitée radialement par les éléments de débrayage (23) et forme sur sa surface périphérique intérieure la surface annulaire de transfert de charge (39), et en ce que sur la circonférence extérieure de la bride (49) se trouve une bague d'appui (69), en particulier sous la forme d'une bague en tôle ourlée autour de la bride (49), qui présente à distance axiale de la bride (49) un bord d'appui (77) annulaire destiné à soutenir l'élément à ressort (67).

5. Dispositif de débrayage selon la revendication 4, caractérisé en ce que la bride (49) de la bague de débrayage (29) s'appuie par une première courbure (73) contre les éléments de débrayage (23), et en ce que la première courbure (73) se raccorde, en direction de l'axe de rotation (5), à une deuxième courbure (75) opposée, contre laquelle s'appuie l'élément à ressort (67) sous précontrainte quand les moyens de liaison par encliquetage (37) ne sont pas couplés mutuellement.

6. Dispositif de débrayage selon la revendication 1, caractérisé en ce que l'élément de précontrainte (67a-e, h, i) est prévu du côté boîte de vitesses des éléments de débrayage (23a-e, h, i), en ce que la bague de débrayage (29a-e) possède une bride (49a-e) pour l'essentiel annulaire en saillie sensiblement radiale, par laquelle elle s'appuie sur le côté moteur des éléments de débrayage (23a-e), ainsi qu'une zone annulaire (47a-e) d'extension sensiblement axiale, qui s'introduit dans une ouverture centrée (27a-e) délimitée radialement par les éléments de débrayage (23a-e), possède une surface frontale axiale (83, 83a-e) tournée vers la butée de débrayage (31a-e) et forme sur sa surface périphérique intérieure la surface annulaire de transfert de charge (39a-e) de la bague de débrayage (29a-e), et en ce que l'élément de précontrainte (67a-e) est inséré entre la surface frontale (83, 83b-e) de la bague de débrayage (29a-e) et une surface opposée axialement (87; 87b-e) de la bague rotative (35a-e).

7. Dispositif de débrayage selon la revendication 6, caractérisé en ce qu'au moins l'élément de précontrainte (67a-e) est conformé en rondelle ressort ou en ressort à membrane pour l'essentiel annulaire, qui s'appuie par sa circonférence intérieure contre la surface frontale axiale (83, 83b-e) de la bague de débrayage (29a-e).

8. Dispositif de débrayage selon la revendication 7, caractérisé en ce que la bague rotative (35a) porte un disque annulaire (85), qui s'appuie sur un épaulement (87a) de la bague rotative (35a) tourné axialement vers la surface frontale (83) de la bague de débrayage (29a), et en ce que l'élément de précontrainte (67a) présente un seul élément à ressort (67a), qui s'appuie par sa circonférence extérieure sur le disque (85).

9. Dispositif de débrayage selon la revendication 8, caractérisé en ce le disque (85) présente sur sa circonférence extérieure des moyens de centrage (89) pour l'élément à ressort (67a).

10. Dispositif de débrayage selon la revendication 7, caractérisé en ce que l'élément de précontrainte présente au moins une paire d'éléments à ressorts (67b-e) conformés en rondelles ressorts ou en ressorts à membrane, qui s'appuient les uns sur les autres par leur circonférence extérieure, et dont un premier élément à ressort (67b-e) est appuyé par sa circonférence intérieure sur la surface frontale (83b-e) de la bague de débrayage (29b-e) et un deuxième élément à ressort est appuyé par sa circonférence intérieure sur la bague rotative (35b-e).

11. Dispositif de débrayage selon la revendication 10, caractérisé en ce que, axialement entre le premier et le deuxième éléments à ressort (67b), est placé un disque intermédiaire annulaire (99).

12. Dispositif de débrayage selon la revendication 10, caractérisé en ce que le premier et le deuxième éléments à ressort (67c) portent sur leur périphérie extérieure des pattes (101) en saillie axiale, qui s'engagent dans des évidements formés sur l'autre élément à ressort (67c), respectivement.

13. Dispositif de débrayage selon l'une des revendications 10 à 12, caractérisé en ce que, axialement entre le deuxième élément à ressort (67b-e) et un épaulement (87b-e) de la bague rotative (35b-e) tourné vers la surface frontale (83b-e) de la bague de débrayage (29b-e), est placé un disque annulaire (85b-e).

14. Dispositif de débrayage selon l'une des revendications 7 à 13, caractérisé en ce qu'en position axiale entre la surface frontale (83; 83b-d) de la bague de débrayage (29a-d) et l'élément à ressort (67a-d) appuyé par sa circonférence intérieure contre la surface frontale (83; 83b-d), est placé un disque d'appui annulaire (81; 81b-d), et en ce que la bague rotative (35a-d) présente du côté du disque d'appui (81; 81b-d) opposé à l'élément à ressort (67a-d) un épaulement (91; 91b-d) immobilisant axialement le disque d'appui (81; 81b-d).

15. Dispositif de débrayage selon la revendication 14, caractérisé en ce que l'élément de transfert de charge (45a-d) et la bague de débrayage (29a-d) forment des butées mutuellement associées (57a-d, 65a-d), qui limitent le jeu de mouvement axial de l'élément de transfert de charge (45a-d) en direction de la butée de débrayage (31a-d) lors du verrouillage des moyens de liaison par encliquetage (37a-d) à une valeur maximale qui est inférieure à une course de ressort résiduelle de l'élément à ressort (67a-d) subsistant lorsque les moyens de liaison par encliquetage (37a-d) sont obturés.

16. Dispositif de débrayage selon la revendication 14 ou 15, caractérisé en ce que, depuis la circonférence extérieure du disque d'appui (81d), des pattes (103) forment saillie axiale, qui saisissent la circonférence extérieure de chaque élément à ressort (67d) pour son centrage.

17. Dispositif de débrayage selon l'une des revendications 7 à 14, caractérisé en ce qu'une partie de centrage (105), en particulier une partie de centrage en tôle, est prévue sur la zone annulaire (47e) d'extension axiale de la bague de débrayage (29e) au niveau de sa surface frontale (83e), partie depuis laquelle des pattes (107) forment saillie pour l'essentiel axialement, pattes qui saisissent la circonférence extérieure de chaque élément à ressort (67e) pour son centrage.

18. Dispositif de débrayage selon la revendication 17, caractérisé en ce que les pattes (107) possèdent des extrémités (109) cintrées radialement vers l'intérieur pour immobiliser l'élément à ressort (67e) pendant le pré-assemblage sur la bague de débrayage (29e).

19. Dispositif de débrayage selon l'une des revendications 7 à 18, caractérisé en ce que la bague de transfert de charge (45a-e) est conformée en bague ouverte, dont les extrémités (55a-e) s'étendent d'abord vers l'extérieur pour l'essentiel dans le plan de la bague ouverte et de façon sensiblement radiale, puis sont coudées axialement en direction de la butée de débrayage (31a-e), pour s'étendre ensuite à nouveau vers l'extérieur dans le sens radial, et en ce qu'au moins l'élément à ressort (67a-e) appuyé par sa circonférence intérieure contre la surface frontale axiale (83; 83b-e) de la bague de débrayage (29a-e) chevauche axialement la zone coudée axialement (61a-e) des deux extrémités (55a-e).

20. Dispositif de débrayage selon la revendication 6, caractérisé en ce que la bague de débrayage (29h, i) possède une bride (49h, i) pour l'essentiel annulaire en saillie sensiblement radiale, par laquelle elle s'appuie sur le côté moteur des éléments de débrayage (23h, i), ainsi qu'une zone annulaire (47h, i) d'extension pour l'essentiel axiale, qui s'introduit dans une ouverture (131h, i) centrée délimitée radialement par les éléments de débrayage (23h,i), et forme sur sa surface périphérique intérieure la surface annulaire de transfert de charge (39h, i) de la bague de débrayage (29h, i), en ce que la bague de transfert de charge (45h, i) est conformée en bague ouverte, dont les extrémités (55h, i), pour libérer la liaison par encliquetage (37h, i), arrivent au moins approximativement dans l'espace situé axialement entre la zone des extrémités des éléments de débrayage (23h, i) délimitant l'ouverture centrée (27h, i) et la butée de débrayage (31h, i), et en ce que l'élément de précontrainte (67h, i) forme ou délimite un espace de passage (131 h, i) à travers lequel les extrémités (55h, i) passent radialement vers l'extérieur, en particulier sans contact.

21. Dispositif de débrayage selon la revendication 20, caractérisé en ce que l'élément de précontrainte (67h, i) s'appuie au niveau de sa circonférence extérieure directement sur les éléments de débrayage (23h, i) et, au niveau de sa circonférence intérieure, sur la bague rotative (35h, i).

22. Dispositif de débrayage selon la revendication 21, caractérisé en ce que l'ouverture (131h) de l'élément à ressort (67h) pour le passage des extrémités (55h) de la bague de transfert de charge (45h) est conformée en fente s'étendant concentriquement à l'axe de rotation (5h).

23. Dispositif de débrayage selon la revendication 21, caractérisé en ce que le ressort à membrane (67i) présente des lames de ressort (149) en saillie radiale vers l'intérieur séparées par des fentes radiales (151) et en ce que les extrémités (55i) de la bague de transmission de charge (45i) passent alors radialement vers l'extérieur à travers au moins une de ces fentes (131i) élargie dans la direction circonférentielle.

24. Dispositif de débrayage selon la revendication 23, caractérisé en ce que le ressort à membrane (67i) possède plusieurs fentes élargies (131i) disposées à des distances angulaires égales les unes des autres.

25. Dispositif de débrayage selon l'une des revendications 21 à 24, caractérisé en ce que depuis la circonférence extérieure de l'élément à ressort (67h, i) dépassent axialement des nez (139; 139i), qui se mettent en prise entre les éléments de débrayage (23h, i) et immobilisent l'élément à ressort (67h, i) en rotation.

26. Dispositif de débrayage selon l'une des revendications 21 à 25, caractérisé en ce que l'élément à ressort (67h, i) présente des courbures opposées dans les zones d'appui de sa circonférence intérieure et de sa circonférence extérieure, afin de réduire l'usure.

27. Dispositif de débrayage selon la revendication 26, caractérisé en ce que la bague rotative (35h, i) de la butée de débrayage (31h, i) porte un disque annulaire (85h, i), qui s'appuie sur un épaulement (87h, i) de la bague rotative (35h, i) tourné axialement vers la surface frontale de la bague de débrayage (29h, i) immédiatement à côté de la butée de débrayage (31h, i) et sur lequel l'élément à ressort (67h, i) s'appuie de son côté par sa zone intérieure.

28. Dispositif de débrayage selon la revendication 26 ou 27, caractérisé en ce que l'élément à ressort (67h, i) est fixé au niveau de sa circonférence extérieure sur les éléments de débrayage (23h, i) au moyen de ressorts de maintien (145, 145i).

29. Dispositif de débrayage selon l'une des revendications 1 à 28, caractérisé en ce que la bague extérieure non rotative (33; 33a, b, h, i) est munie, sur son côté tourné vers les éléments de débrayage (23; 23a-e, h, i), d'un disque de couverture (97; 97a-e, h, i) tourné radialement vers l'intérieur et se terminant à faible distance de la bague rotative intérieure (35; 35a-e, h, i), et en ce que sur la bague rotative (35; 35a-e, h, i), à faible distance du disque de couverture (97; 97a-e, h, i), est placé un disque (85; 85a-e, h, i), qui forme avec le disque de couverture (97; 97a-e, h, i) un joint à labyrinthe et contre lequel s'appuie axialement l'élément de précontrainte (67; 67a-e, h, i).
